# EUROPEAN PATENT APPLICATION

(11) **EP 3 572 377 A1**
(43) Date of publication of application: **27.11.2019**
(21) Application number: 18857411.5
(22) Date of filing: 26.09.2018
(51) Int. Cl.: C02F 1/00, A47J 31/44, A47J 31/00

(54) **WATER PURIFIER**

(30) Priority: 11.04.2018 CN 201820509893 U; 11.04.2018 CN 201810322956; 11.04.2018 CN 201820509892 U; 11.04.2018 CN 201820509862 U; 11.04.2018 CN 201810322967; 11.04.2018 CN 201820509891 U
(71) Applicant: Foshan Midea Chungho Water Purification Equipment, Foshan, Guangdong 528311 (CN); Midea Group Co., Ltd., Foshan, Guangdong 528311 (CN)
(72) Inventor: The designation of the inventor has not yet been filed
(74) Representative: RGTH
(86) International application number: PCT/CN2018/107551
(87) International publication number: WO 2019/196350

(57) **Abstract**

The present disclosure provides a water purifier, comprising: a water purification assembly; a water receiving assembly connected with the water purification assembly by a pipeline; a water storage assembly arranged on the water receiving assembly, the water purification assembly delivering water to the water storage assembly through the water receiving assembly; and a sensor arranged in the water receiving assembly and being configured to detect the amount of water in the water storage assembly. When the sensor detects that the amount of water in the water storage assembly reaches a preset amount of water, the water purification assembly is controlled to stop delivering water. According to the water purifier provided by the present disclosure, water purified by the water purification assembly is delivered to the water receiving assembly by the pipeline, and then is delivered to the water storage assembly by the water receiving assembly and stored to meet user's water demand. In addition, the sensor is arranged in the water receiving assembly to detect the liquid level in the water storage assembly. When the liquid level in the water storage assembly reaches a preset position, the water purification assembly stops delivering water, thereby realizing automatic water storage of the water purifier, preventing the purified water from overflowing the water storage assembly, and eliminating user's guard to liberate the user.

## Description

The present application claims the priorities to Chinese Applications No. 201820509893.6, 201810322956.1, 201820509892.1, 201820509862.0 and 201810322967.X, filed at Chinese Patent Office on April 11, 2018, and entitled "WATER PURIFIER", as well as the priority to Chinese Application No. 201820509891.7, filed at Chinese Patent Office on April 11, 2018, and entitled "WATER STORAGE DEVICE AND WATER PURIFIER", the entire contents of which are herein incorporated by reference.

### Technical Field

The present disclosure relates to the technical field of water purifiers, and more specifically, relates to a water purifier.

### Background

At present, the water purifiers which are commercially available, because of too small flow, needs to cooperate with a pressure barrel to store water and pressurize to ensure the flow of the water purifier. The pressure barrel with a sealed structure cannot be cleaned, and will be contaminated after long-term use, so it is unsanitary and cannot guarantee the freshness and cleanness of drinking water. The conventional pressure barrel is large in terms of volume, occupies a large space, and has high cost. Moreover, the water outlet of the conventional water purifier is directly connected to a user's faucet, and the container needs to be placed under the faucet when the user takes water, so it is laborious when the pot or kettle is heavy. At the same time, the user needs to wait for a long time when receiving the water.

### Summary

The present disclosure aims to solve at least one of the technical problems in the prior art.

Thus, one embodiment of the present disclosure provides a water purifier.

In view of this, according to an embodiment of the present disclosure, a water purifier is provided, including: a water purification assembly; a water receiving assembly connected with the water purification assembly by a pipeline; a water storage assembly arranged on the water receiving assembly, the water purification assembly delivering water to the water storage assembly through the water receiving assembly; and a sensor arranged in the water receiving assembly and being configured to detect the amount of water in the water storage assembly. When the sensor detects that the amount of water in the water storage assembly reaches a preset amount of water, the water purification assembly is controlled to stop delivering water.

In the water purifier in accordance with the present disclosure, water purified by the water purification assembly is delivered to the water receiving assembly by the pipeline, and then the purified water is delivered to the water storage assembly by the water purification assembly and stored to meet user's water demand. In addition, the sensor is arranged in the water receiving assembly to detect the liquid level in the water storage assembly. When the liquid level in the water storage assembly reaches a preset position, the water purification assembly stops delivering water, thereby realizing automatic water storage of the water purifier, preventing the purified water from overflowing the water storage assembly without user's guard to liberate the user. Moreover, the water storage assembly is placed on the water receiving assembly, and the water flowing out of the water receiving assembly directly enters the water storage assembly, so that the user can use the water as needed, the time for the user to wait for receiving water is reduced, and correspondingly, the dependence on a pressure barrel can be canceled. The solution that the water flows into the water storage assembly for a long time meets the requirement of the user for a large amount of water. Since the pressure barrel is canceled, the production cost of the water purifier is reduced, and the water contamination caused by the inability to clean the pressure barrel is avoided. At the same time, the water storage assembly is placed on the water receiving assembly, thereby avoiding complicated operation that the user needs to hold a kettle to wait for receiving water.

In addition, the water purifier in accordance with the above embodiment of the present disclosure may also have the following additional technical features:

In the above technical solution, preferably, the water purifier further includes a floater assembly arranged in the water storage assembly. The sensor detects the amount of water in the water storage assembly by detecting the floater assembly.

In this technical solution, the floater assembly is arranged in the water storage assembly, and the sensor detects the amount of water in the water storage assembly by detecting the working state of the floater assembly. Moreover, the detection on the floater assembly is easy to implement and low in cost.

In some embodiments, the floater assembly includes a floater box and a floater movably arranged in the floater box. The sensor detects the amount of water in the water storage assembly by detecting the position of the floater.

In this technical solution, the liquid level is measured as the floater floats in the floater box with the liquid level.

In some embodiments, the water receiving assembly includes a base provided with a first connecting portion, and an upright rod fitted with the first connecting portion.

In this technical solution, the water receiving assembly is composed of the base and the upright rod to ensure the uprightness of the upright rod and avoid the fixed connection of the water receiving assembly to a table, so that the water receiving assembly can be placed at any position of the table through the base, and the use range of the water purifier is enlarged.

In some embodiments, the upright rod includes: a support frame provided with a sensor mounting position and a line passing hole, one end of the support frame being fitted with the first connecting portion; and a water nozzle arranged on the support frame and provided with a first water outlet. The sensor is arranged at the sensor mounting position, and the pipeline passes through the line passing hole.

In this technical solution, the water nozzle is arranged on the support frame, so that the purified water flows into the water storage assembly through the water nozzle. The sensor is mounted on the support frame and can sense the change of the liquid level, so that the water purification assembly is controlled to stop delivering water when the amount of water in the water storage assembly reaches the preset amount of water. The line passing hole is provided in the support frame, which ensures that the pipeline can penetrates the support frame.

In some embodiments, the support frame includes: at least one longitudinal keel provided with a sensor mounting position and a line passing hole; and at least one transverse keel connected with the longitudinal keel crosswise and provided with a line passing hole.

In this technical solution, the support frame is composed of the longitudinal keel and the transverse keel, so that the stability of the support frame is ensured. The longitudinal keel is provided with the sensor mounting position to ensure the mounting position of the sensor, the longitudinal keel is provided with the line passing hole to facilitate the connection of the line of the sensor, and the transverse keel is provided with the line passing hole to ensure that the pipeline penetrates the support frame.

In some embodiments, the bottom of the support frame is provided with a first screw hole, and the base is provided with a first mounting hole corresponding to the first screw hole.

In this technical solution, the support frame is fixed with the base by a screw to ensure the strength of connection between the support frame and the base. Moreover, it is easy to install the support frame and it is convenient to install and maintain the support frame.

In some embodiments, the upright rod further includes: a decorative rod sleeved outside the support frame and provided with a water nozzle passing hole through which the water nozzle passes; and a first decorative cover arranged at the top of the support frame.

In this technical solution, the decorative rod is sleeved outside the support frame, and the first decorative cover is arranged at the end of the support frame, thereby ensuring the attractiveness of the upright rod, and protecting the support frame, the pipeline, the sensor and other components.

In some embodiments, a first anti-rotating structure is arranged in the decorative rod, and a second anti-rotating structure fitted with the first anti-rotating structure is arranged on the support frame.

In this technical solution, the first anti-rotating structure is arranged in the decorative rod, and the second anti-rotating structure fitted with the first anti-rotating structure is arranged on the support frame, thereby avoiding the rotation of the decorative rod and the support frame, and enabling the decorative rod and the support frame to be stably mounted together.

In some embodiments, the decorative rod is provided with a decorative bulge at a position opposite to the water nozzle passing hole.

In this technical solution, the decorative rod is provided with the decorative bulge at the position opposite to the water nozzle passing hole, so that the whole upright rod is more artistic and the aesthetics of the water purifier is improved.

In some embodiments, the first connecting portion includes: a connecting pipe arranged on the base, the support frame being fitted with the inner side of the connecting pipe, and the decorative rod being fitted with the outer side of the connecting pipe; a first guiding portion arranged on the connecting pipe; and a first positioning structure arranged on the base, a second positioning structure fitted with the first positioning structure being arranged on the decorative rod.

In this technical solution, the support frame is inserted into the connecting pipe, and the decorative rod is sleeved outside the connecting pipe, thereby ensuring the strength of connection between the upright rod and the base, covering the connecting pipe and improving the aesthetics of the water purifier. The first positioning structure is arranged on the base to cooperate with the second positioning structure on the decorative rod, thereby ensuring a stable connection between the decorative rod and the base, and ensuring the stability of connection between the upright rod and the base.

In some embodiments, the base is provided with a connecting pipe mounting hole, and the connecting pipe protrudes from the connecting pipe mounting hole. The outer wall of the connecting pipe is spaced from the wall of the connecting pipe mounting hole, and the first positioning structure is arranged between the outer wall of the connecting pipe and the wall of the connecting pipe mounting hole.

In this technical solution, the base is provided with the connecting pipe mounting hole, and the connecting pipe is sunk into the mounting hole. The decorative rod can stretch into the gap between the outer wall of the connecting pipe and the connecting pipe mounting hole during installation, so that the upright rod and the base are more integral, and the stability of connection between the upright rod and the base is further ensured.

In some embodiments, the pipeline includes a line connected with the sensor, and a water pipe communicating with the water nozzle.

In this technical solution, power is supplied to the sensor through the line, and water is delivered to the water nozzle through the water pipe and then delivered to the water storage assembly through the water nozzle.

In some embodiments, the upright rod further includes a hose structure connected to the water pipe and the water nozzle.

In this technical solution, there is an angle between the support pipeline and the water nozzle. Therefore, the water pipe and the water nozzle connected by a hose can be inserted into two ends of the hose respectively to complete the installation, so that the connection step between the water pipe and the water nozzle can be simplified; and the hose can play a role of a sealing ring, In this way, water leakage at the joint is avoided, and water blockage caused when the water pipe is bent can be avoided.

In some embodiments the cross section of the base is circular, elliptical, polygonal or racetrack-shaped. The upright rod and the water nozzle are both columnar.

In this technical solution, the upright rod and the water nozzle are columnar, so that the water purifier has a stronger artistic sense. The cross section of the base may be circular, elliptical, polygonal or racetrack-shaped.

In some embodiments, the base is provided with a water storage assembly mounting position, a third positioning structure is arranged on the water storage assembly mounting position, a fourth positioning structure matched with the third positioning structure is arranged at the bottom of the water storage assembly, and the water storage assembly is arranged on the base and positioned by the third positioning structure and the fourth positioning structure.

In this technical solution, the base is provided with the water storage assembly mounting position, the third positioning structure is arranged on the water storage assembly mounting position, and the fourth positioning structure is arranged at the bottom of the water storage assembly, thereby ensuring the accuracy of the placement position of the water storage assembly, and avoiding water splashing caused by inaccurate placement of the water storage assembly.

In some embodiments, the water storage assembly includes: a water storage component provided with a second connecting portion, the floater assembly being arranged in the water storage component; and a holding component connected with the water storage component.

In this technical solution, the combined water storage component and holding component can be conveniently machined into different colors, thereby enriching the color match between the water storage component and the holding component, and satisfying the modern industrial design sense. The multi-color requirement can be realized by simply injecting different color materials into different molds, so the process is simple, the yield is high and the cost is low.

In some embodiments, the holding component includes a first shell and a second shell fitted with each other, the first shell is provided with a third connecting portion, and the third connecting portion is sleeved on the second connecting portion.

In this technical solution, since the holding component itself is composed of two shells, the color match of the holding component itself can also be enriched, and the modern industrial design sense is satisfied. As such, the multi-color requirement can be realized by simply injecting different color materials into different molds, so the process is simple, the yield is high and the cost is low.

In some embodiments, the second connecting portion is provided with a second screw hole, and the third connecting portion is provided with a second mounting hole at a position corresponding to the second screw hole.

In this technical solution, the second connecting portion is fixed with the third connecting portion by a screw to ensure the connection strength there between, and the both are easy to install fast and conveniently.

In some embodiments, the second mounting hole is located inside the holding component.

In this technical solution, the second mounting hole is provided inside the holding component, so that a screw-free design is realized on the appearance of the holding component, and the aesthetics of the appearance of the water storage assembly is improved.

In some embodiments, the first shell and the third connecting portion are of an integrated structure.

In this technical solution, the first shell and the third connecting portion are configured into an integrated structure, thereby satisfying the strength of connection between the first shell and the third connecting portion, and simplifying the installation step of the both. Moreover, the integrated first shell and third connecting portion are suitable for mass production with low production cost.

In some embodiments, the second connecting portion and the third connecting portion are both columnar, and the cross sections of the second connecting portion and the third connecting portion are adaptively circular, elliptical, polygonal or racetrack-shaped, respectively.

In this technical solution, the second connecting portion and the third connecting portion are columnar, which facilitates sleeving and installation between the both. The cross sections of the second connecting portion and the third connecting portion may be circular, elliptical, polygonal or racetrack-shaped.

In some embodiments, the outer wall of the second connecting portion is provided with a second guiding portion, and the inner wall of the third connecting portion is provided with a third guiding portion fitted with the second guiding portion.

In this technical solution, the second connecting portion is provided with a second guiding portion, and the third connecting portion is provided with a third guiding portion, so that the second connecting portion is sleeved with the third connecting portion more smoothly. Moreover, the cooperation between the second guiding portion and the third guiding portion can achieve a positioning effect to avoid run out between the second connecting portion and the third connecting portion.

In some embodiments, the first shell is provided with at least one fourth connecting portion, and the second shell is provided with at least one fifth connecting portion fitted with the fourth connecting portion.

In this technical solution, the installation of the holding component is completed by the fitting connection of the fourth connecting portion and the fifth connecting portion, so the installation process is convenient, excessive installation steps are not needed, and the assembly speed is improved.

In some embodiments, the holding component composed of a plurality of shells is of a columnar structure; the first shell includes: a first side wall and a bottom wall connected to the first side wall, each of the first side wall and the bottom wall being provided with a fourth connecting portion; or a first side wall and a top wall connected to the first side wall, each of the first side wall and the top wall being provided with a fourth connecting portion; and the second shell includes: a second side wall and a bottom wall connected to the second side wall, each of the second side wall and the bottom wall being provided with a fifth connecting portion; or a second side wall and a top wall connected to the second side wall, each of the second side wall and the top wall being provided with a fifth connecting portion.

In this technical solution, the artistry and the holding feeling of the handle are improved by the columnar shells. The first shell composed of the first side wall and the bottom wall connected to the first side wall cooperates with the second shell composed of the second side wall and the top wall connected to the second side wall, thereby ensuring that the handle includes two shells, facilitating the injection molding of the first shell and the second shell, reducing the difficulty of installation, and ensuring the integrity of the plurality of shells after installation. Similarly, the first shell composed of the first side wall and the top wall connected to the first side wall cooperates with the second shell composed of the second side wall and the bottom wall connected to the second side wall, thereby ensuring that the handle includes two shells, facilitating the injection molding of the first shell and the second shell, reducing the difficulty of installation, and ensuring the integrity of the plurality of shells after installation.

In some embodiments, a plurality of fourth connecting portions are arranged inside the first shell symmetrically about the central axis of the holding component; and a plurality of fifth connecting portions are arranged inside the second shell symmetrically about the central axis of the holding component.

In this technical solution, the plurality of fourth connecting portions and the plurality of fifth connecting portions are arranged symmetrically about the central axis of the shells, thereby ensuring the connection strength after the first shell and the second shell are installed, avoiding local gaps and ensuring the aesthetics of the appearance of the handle.

In some embodiments, the fourth connecting portion is any one of a buckle, a card slot, a slot and an insert, and the fifth connecting portion is any one of a buckle, a card slot, a slot and an insert fitted with the fourth connecting portion.

In this technical solution, the first shell is connected with the second shell by the engagement of the buckle and the card slot or the insert and the slot, thereby reducing the difficulty of installation of the first shell and the second shell, and improving the installation speed between the first shell and the second shell.

In some embodiments, the water storage assembly includes a water tank body and a water tank cover.

In this technical solution, the water tank body and the water tank cover constitute a water storage assembly, which facilitates the cleaning of the water storage assembly, and prevents dust and sundries from falling into the water storage assembly to ensure clean water storage.

In some embodiments, the top of the water tank cover is provided with a through hole, and the water receiving assembly delivers water to the water tank body through the through hole.

In this technical solution, the top of the water tank cover is provided with a through hole through which the water receiving assembly delivers the purified water to the water storage assembly, so that the water storage assembly does not need to be opened when storing water, dust and sundries are further prevented from falling into the water storage assembly, and clean water storage is ensured.

In some embodiments, the water tank body is provided with a second water outlet; the water tank cover is provided with a third water outlet matching the second water outlet; and the water tank is provided with a water outlet nozzle on the outer wall of the circumferential side of the second water outlet.

In this technical solution, when a user pours water, the purified water is accurately guided into the user's water container from the water outlet nozzle through the second water outlet and the third water outlet, which is convenient for the user to use.

In some embodiments, the floater assembly is arranged in the water tank cover; the inner side wall of the water tank cover is provided with a sixth connecting portion, and the floater assembly is provided with a seventh connecting portion fitted with the sixth connecting portion.

In this technical solution, the floater assembly is arranged in the water tank cover, so that the height of the floater assembly is increased, and the water storage capacity of the water storage assembly is improved.

In some embodiments, the water storage assembly further includes a dial block movably arranged at the through hole to open or close the through hole.

In this technical solution, the dial block is movably arranged at the through hole, the dial block is opened when water is received to expose the through hole, the water enters the water storage assembly through the through hole, and the dial block can be closed after the water is full to close the through hole, thereby ensuring the cleanness of the water in the water storage assembly.

In some embodiments, a rotating shaft is arranged on one of the water tank cover and the dial block, and a shaft hole fitted with the rotating shaft is provided on the other one of the water tank cover and the dial block; or a slide rail is arranged on one of the water tank cover and the dial block, and a slide support fitted with the slide rail is arranged on the other one of the water tank cover and the dial block.

In this technical solution, the rotating connection of the dial block and the water tank cover is achieved by the fit of the rotating shaft and the shaft hole; or the sliding connection of the dial block and the water tank cover is achieved by the sliding fit of the slide rail and the slide support, so that the user can conveniently open or close the dial block; and the dial block is connected with the water tank cover, and therefore is prevented from being lost.

In some embodiments, the dial block and/or the water tank cover are provided with a first limiting portion for limiting the moving direction of the dial block.

In this technical solution, the dial block and/or the water tank cover are provided with the limiting structure to ensure the exposed position of the through hole. When the water receiving assembly delivers water to the water storage assembly, the water enters the water storage assembly from a fixed position to prevent splashing out of the water storage assembly.

In some embodiments, the water tank main body is of a cylindrical structure; and the cross section of the water tank body is in the shape of one or more of a circle, an ellipse, a polygon and a racetrack.

In this technical solution, the water tank body is cylindrical such that the entire water storage assembly is artistic. The cross section of the water tank body is in any shape of a circle, an ellipse, a polygon and a racetrack, or is converted among multiple shapes.

In some embodiments, the water purifier further includes a line passing assembly, which comprises a line passing pipe, the line passing pipe being provided with a second limiting portion, and the pipeline passing through the line passing pipe.

In the technical solution, the line passing assembly blocks a hole formed in the table to allow the pipeline to pass, the limiting portion is overlapped to the table, and the line passing pipe penetrates the hole in the table, thus preventing the sundries or liquid on the table from falling down the table to reduce the user's cleaning pressure.

In some embodiments, the line passing assembly further includes a connector provided with an eighth connecting portion; wherein the line passing pipe is provided with a ninth connecting portion fitted with the eighth connecting portion.

In this technical solution, the table is located between the limiting portion and the connector by the cooperation of the line passing pipe and the connector, so that the line passing assembly is firmly fixed on the table to ensure the reliability that the line passing assembly blocks the hole of the table, and the maintenance and replacement of the line passing assembly are facilitated.

In some embodiments, the eighth connecting portion is of a first thread structure, and the ninth connecting portion is of a second thread structure fitted with the first thread structure.

In this technical solution, the line passing pipe is connected with the connector by the thread structures, so that the installation of the line passing pipe and the connector is more convenient, and the installation and maintenance of the line passing assembly are facilitated. The length of thread connection can be automatically adjusted according to the thickness of the table, and thus, the adaptability is good.

In some embodiments, the wall of the line passing pipe is provided with a first opening through which the pipeline passes.

In this technical solution, the wall of the line passing pipe is provided with a first opening, so that the pipeline can pass along the surface of the table during arrangement, the water flow is prevented from being clogged by bending of the pipeline at the end of the line passing pipe, and the pipeline is arranged more tidily.

In some embodiments, the line passing pipe is axially provided with a rib position or a flat position.

In this technical solution, the control on the line passing pipe is increased by the rib position or the flat position. When the line passing pipe and the connector are installed, the line passing pipe can be fixed through the rib position or the flat position and then fixed to the table by the connector, which reduces the difficulty of installing the line passing assembly.

In some embodiments, the line passing assembly further includes a decorative ring sleeved on the line passing pipe; the decorative ring is provided with a second opening matching the first opening; and a tenth connecting portion fitted with the rib position or the flat position is provided in the decorative ring.

In this technical solution, the line passing pipe is beautified by the decorative ring to promote the aesthetics of the line passing assembly. The second opening provided on the decorative ring ensures that the line can be arranged along the table. Moreover, the fit of the tenth connecting portion and the rib position or the flat position realizes the fixation of the decorative ring and the line passing pipe, thus facilitating the installation of the decorative ring and the line passing pipe.

In some embodiments, the line passing assembly further includes a second decorative cover arranged at one end of the line passing pipe, the second decorative cover is provided with an eleventh connecting portion, and the line passing pipe is provided with a twelfth connecting portion fitted with the eleventh connecting portion.

In this technical solution, the second decorative cover is arranged at the end of the line passing pipe to block the end of the line passing pipe, thereby improving the blocking ability against sundries and liquid, and improving the aesthetics of the line passing assembly.

In some embodiments, the eleventh connecting portion is any one of a buckle, a card slot, an insert, a slot and a thread structure; and the twelfth connecting portion is any one of a buckle, a card slot, an insert, a slot and a thread structure fitted with the eleventh connecting portion.

In this technical solution, the difficulty of installing the second decorative cover and the line passing pipe is reduced, the installation speed of the second decorative cover and the line passing pipe is improved and the installation and maintenance are facilitated by mutual fit between the buckle and the card slot, between the insert and the slot or between the thread structures.

In some embodiments, the line passing assembly further includes a sealing ring, which is sleeved on the line passing pipe and located below the second limiting portion.

In this technical solution, the joint between the table and the limiting portion is sealed by the sealing ring to further improve the blocking effect on the liquid and improve the blocking effect of the line passing assembly on sundries and liquid.

In some embodiments, the connector is provided with bulges or grooves.

In this technical solution, the control on the connector is improved by the projections or grooves on the connector, thereby reducing the difficulty of installing the line passing assembly.

In some embodiments, the water purifier further includes a protection pipe penetrating the line passing assembly, the pipeline is arranged in the protection pipe, and the protection pipe is connected with the water receiving assembly.

In this technical solution, the protection pipe protects the pipeline from being damaged, and can be appropriately decorated according to user's home decoration.

Additional aspects and advantages of the present disclosure will become apparent in the following description, or may be learned by practice of the present disclosure.

### Brief Description of the Drawings

The above and/or additional aspects and advantages of the present disclosure will become apparent and be easily understood from the following description of embodiments in conjunction with the accompanying drawings, in which:
Fig. 1 shows a structure diagram of a water purifier provided by one embodiment of the present disclosure;
Fig. 2 shows a structure diagram of a water receiving assembly in the water purifier shown in Fig. 1;
Fig. 3 shows an exploded view of the water receiving assembly shown in Fig. 2;
Fig. 4 shows a structure diagram of a support frame in the water receiving assembly shown in Fig. 3;
Fig. 5 shows a structure diagram of the support frame in the water receiving assembly shown in Fig. 3 in another direction;
Fig. 6 shows a structure diagram of a decorative rod in the water receiving assembly shown in Fig. 3;
Fig. 7 shows a structure diagram of a base in the water receiving assembly shown in Fig. 3;
Fig. 8 shows a structure diagram of a water storage assembly in the water purifier shown in Fig. 1;
Fig. 9 shows a structure diagram indicating that a dial block of the water storage assembly in the water purifier shown in Fig. 1 is closed;
Fig. 10 shows a structure diagram indicating that the dial block of the water storage assembly in the water purifier shown in Fig. 1 is opened;
Fig. 11 shows a structure diagram of a water tank cover in the water purifier shown in Fig. 1;
Fig. 12 shows a view of the water tank cover shown in Fig. 11 in another direction;
Fig. 13 shows an exploded view of the water tank cover shown in Fig. 11;
Fig. 14 shows a structure diagram of the water tank cover shown in Fig. 11, which does not include the dial block or a floater assembly;
Fig. 15 shows a structure diagram of a floater box in the water tank cover shown in Fig. 11;
Fig. 16 shows a structure diagram of the dial block in the water tank cover shown in Fig. 8;
Fig. 17 shows a structure diagram of the water storage assembly shown in Fig. 1 in another direction;
Fig. 18 shows a structure diagram of a water storage assembly in a water purifier provided by another embodiment of the present disclosure, which does not include a water tank cover;
Fig. 19 shows an exploded view of the water storage assembly shown in Fig. 18;
Fig. 20 shows a schematic diagram of connection of a water tank and a first shell in the water storage assembly shown in Fig. 18;
Fig. 21 shows an exploded view of the water tank and the first shell in the water storage assembly shown in Fig. 20;
Fig. 22 shows a structure diagram of the first shell in the water storage assembly shown in Fig. 18;
Fig. 23 shows a structure diagram of a second shell in the water storage assembly shown in Fig. 18;
Fig. 24 shows a structure diagram indicating that a water purifier provided by another embodiment of the present disclosure is installed on a table;
Fig. 25 shows a structure diagram indicating that a line passing assembly in the water purifier shown in Fig. 24 is installed on the table;
Fig. 26 shows a structure diagram of the line passing assembly in the water purifier provided by another embodiment of the present disclosure;
Fig. 27 shows a structure diagram of the line passing assembly in the water purifier provided by another embodiment of the present disclosure;
Fig. 28 shows a structure diagram of the line passing assembly in the water purifier provided by another embodiment of the present disclosure;
Fig. 29 shows a structure diagram of a decorative ring in the line passing assembly shown in Fig. 24;
Fig. 30 shows a structure diagram of a line passing pipe in the line passing assembly shown in Fig. 24;
Fig. 31 shows a structure diagram of a connector in the line passing assembly shown in Fig. 24;
Fig. 32 shows a structure diagram of a second decorative cover in the line passing assembly shown in Fig. 24.

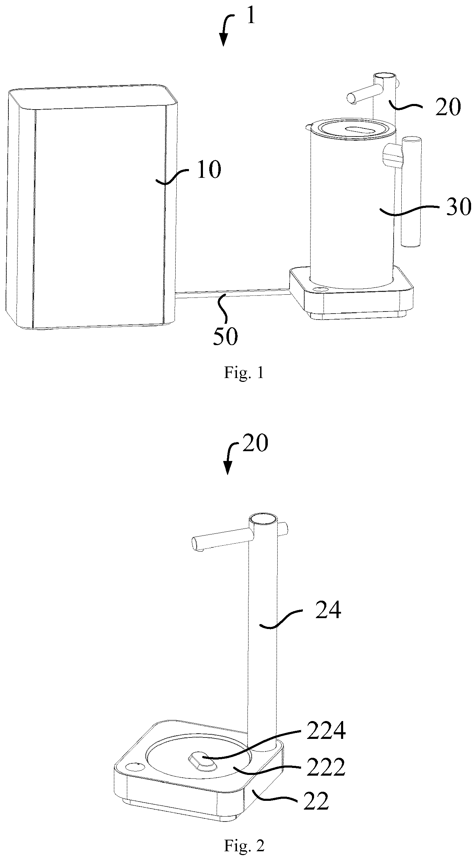

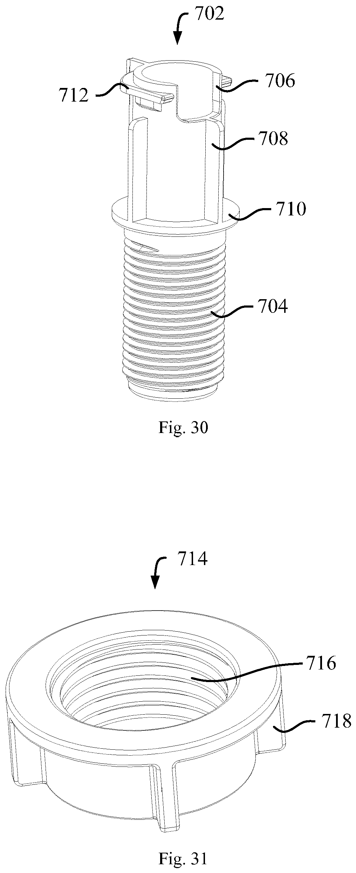

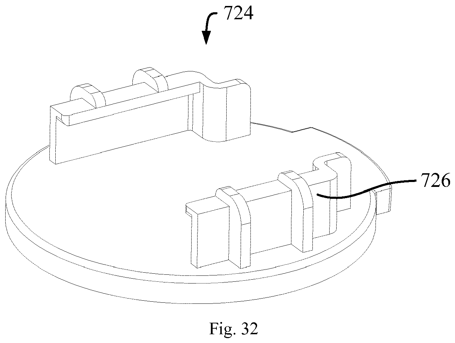

The correspondence between the reference signs and the component names in Fig. 1 to Fig. 32 is:
1 water purifier, 10 water purification assembly, 20 water receiving assembly, 22 base, 222 water storage assembly installation position, 224 third positioning structure, 24 upright rod, 242 support frame, 244 water nozzle, 246 sensor installation position, 248 line passing hole, 250 first screw hole, 252 first decorative cover, 254 decorative rod, 2542 first anti-rotating structure, 2544 decorative bulge, 2546 second positioning structure, 2548 water nozzle passing hole, 26 first connecting portion, 262 connecting pipe, 264 first guiding portion, 266 first positioning structure, 28 hose structure, 30 water storage assembly, 32 water storage component, 322 second connecting portion, 324 second screw hole, 34 holding component, 342 first shell, 3422 first side wall, 3424 bottom wall, 344 third connecting portion, 346 fourth connecting portion, 348 second shell, 3482 second side wall, 3484 top wall, 350 fifth connecting portion, 352 third guiding portion, 354 second mounting hole, 360 water tank main body, 362 water outlet nozzle, 364 water tank cover, 366 through hole, 368 dial block, 370 rotating shaft, 372 shaft hole, 380 fourth positioning structure, 40 sensor, 50 pipeline, 502 line, 504 water pipe, 60 floater assembly, 62 floater box, 64 floater, 70 line passing assembly, 702 line passing pipe, 704 ninth connecting portion, 706 first opening, 708 rib position, 710 second limiting portion, 712 eleventh connecting portion, 714 connector, 716 eighth connecting portion, 718 bulge, 720 decorative ring, 722 second opening, 724 second decorative cover, 726 tenth connecting portion, 728 sealing ring, 730 protection pipe, 8 table.

### Detailed Description of the Embodiments

In order to understand the above objectives, features and advantages of the present disclosure more clearly, the present disclosure will be further described in detail below in conjunction with the accompanying drawings and specific embodiments. It should be noted that the embodiments of the present application and features in the embodiments can be combined with each other without conflicts.

In the following description, numerous specific details are set forth in order to fully understand the present disclosure. However, the present disclosure can also be implemented in other ways than those described herein. Therefore, the scope of the present disclosure is not limited by the specific embodiments disclosed below.

A water purifier 1 according to some embodiments of the present disclosure will be described below with reference to Fig. 1 to Fig. 32.

As shown in Fig. 1 to Fig. 32, according to one embodiment of the present disclosure, a water purifier 1 is provided, including: a water purification assembly 10; a water receiving assembly 20 connected with the water purification assembly 10 by a pipeline 50; a water storage assembly 30 arranged on the water receiving assembly 20, the water purification assembly 10 delivering water to the water storage assembly 30 through the water receiving assembly 20; and a sensor 40 arranged in the water receiving assembly 20 to detect the amount of water in the water storage assembly 30; wherein, when the sensor 40 detects that the amount of water in the water storage assembly 30 reaches a preset amount of water, the water purification assembly 10 is controlled to stop delivering water.

In the water purifier 1 provided by the present disclosure, water purified by the water purification assembly 10 is delivered to the water receiving assembly 20 by the pipeline 50, and then the purified water is delivered to the water storage assembly 30 by the water purification assembly 10 and stored to meet user's water demand. In addition, the sensor 40 is arranged in the water receiving assembly 20 to detect the liquid level in the water storage assembly 30. When the liquid level in the water storage assembly 30 reaches a preset position, the water purification assembly 10 stops delivering water, thereby realizing automatic water storage of the water purifier 1, preventing the purified water from overflowing the water storage assembly 30, and eliminating user's guard to liberate the user. The water storage assembly 30 is placed on the water receiving assembly 20, and the water flowing out of the water receiving assembly 20 directly enters the water storage assembly 30, so that the user can use the water as needed, the time for the user to wait for receiving water is reduced, and correspondingly, the dependence on a pressure barrel can be canceled. The solution that the water flows into the water storage assembly 30 for a long time meets the requirement of the user for a large amount of water. Since the pressure barrel is canceled, the production cost of the water purifier 1 is reduced, and the water contamination caused by the inability to clean the pressure barrel is avoided. At the same time, the water storage assembly 30 is placed on the water receiving assembly 20, thereby avoiding complicated operation that the user needs to hold a kettle to wait for receiving water.

The water purifier 1 provided by the present disclosure is improved from the water purifier 1 in the related technology. The independent water receiving assembly 20 is provided to realize flexible setting of the water outlet position of the water purifier 1 without being restricted by the position of a faucet. The water storage assembly 30 is used for storing water, the sensor 40 detects the amount of water in the water storage assembly 30, and after the water in the water storage assembly 30 reaches a preset amount of water, the water purifier 1 stops delivering water to the water storage assembly 30. The sensor 40 can directly detect the amount of water in the water storage assembly 30, for example, directly detect the liquid level in the water storage assembly 30, or detect the weight of the water storage assembly 30.

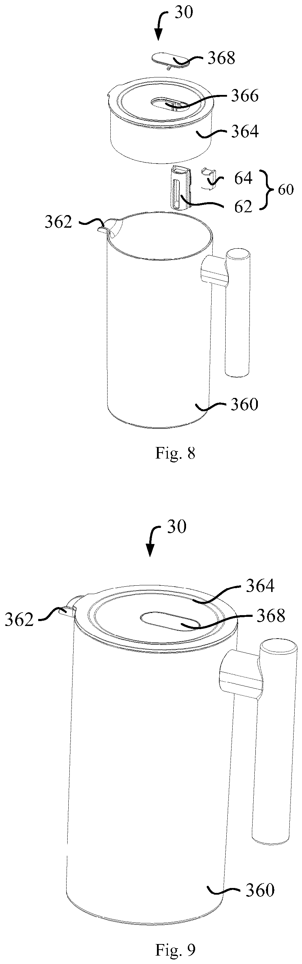

In one embodiment of the present disclosure, preferably, as shown in Figs. 8, 11, 13 and 15, the water purifier further includes a floater assembly 60 arranged in the water storage assembly 30. The sensor 40 detects the amount of water in the water storage assembly 30 by detecting the floater assembly 60.

In this embodiment, the floater assembly 60 is arranged in the water storage assembly 30, the sensor 40 detects the amount of water in the water storage assembly 30 by detecting the operating state of the floater assembly 60, and the detection on the floater assembly 60 is easy to implement and low in cost. Specifically, as an improvement on the water purifier 1 in the related technology, the water storage assembly 30 is provided for storing water, so that the pressure barrel in the water purifier 1 is canceled. In addition, the amount of water in water storage assembly 30 is measured through the floater assembly 60, and after the water in the water storage assembly 30 reaches the preset amount of water, the water purifier 1 stops delivering water to the water storage assembly 30.

In one embodiment of the present disclosure, preferably, as shown in Fig 8, the floater assembly 60 includes a floater box 62 and a floater 64 movably arranged in the floater box 62, and the sensor 40 detects the amount of water in the water storage assembly 30 by detecting the position of the floater 64. More preferably, the floater 64 is an electronic floater 64 capable of transmitting the liquid level remotely, and may be self-powered to directly emit a signal. Alternatively, the floater 64 may be in an external detection mode, so that the sensor 40 detects the position of the floater 64 and emits a signal, and the signal is received by a controller arranged in the water receiving assembly 20 or the water purification assembly 10 to control the water purifier 1 to stop delivering water. More preferably, the floater 64 is a floating ball.

In this embodiment, the liquid level is measured as the floater 64 floats in the floater box 62 with the liquid level.

In one embodiment of the present disclosure, preferably, as shown in Figs. 2 to 7, the water receiving assembly 20 includes a base 22 on which a first connecting portion 26 is formed, and an upright rod 24 fitted with the first connecting portion 26.

In this embodiment, the water receiving assembly 20 is composed of the base 22 and the upright rod 24 to ensure the uprightness of the upright rod 24 and avoid the fixed connection of the water receiving assembly 20 to a table 8, so that the water receiving assembly 20 can be placed at any position of the table 8 through the base 22, and the use range of the water purifier 1 is enlarged.

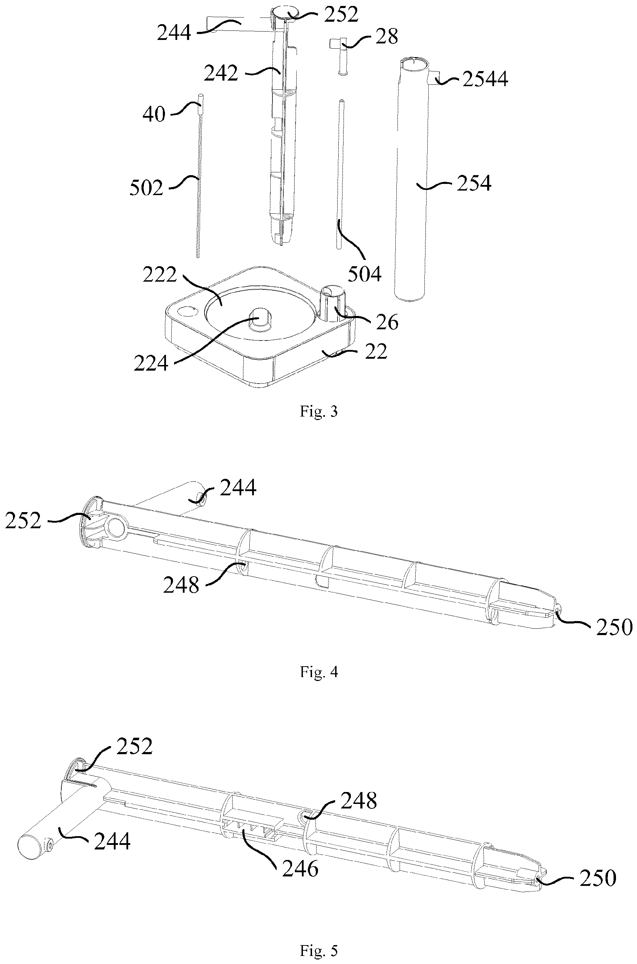

In one embodiment of the present disclosure, preferably, as shown in Figs. 3 to 5, the upright rod 24 includes: a support frame 242 provided with a sensor mounting position 246 and a line passing hole 248, one end of the support frame 242 being fitted with the first connecting portion 26; and a water nozzle 244 arranged on the support frame 242 and provided with a first water outlet. The sensor 40 is arranged at the sensor mounting position 246, and the pipeline 50 passes through the line passing hole 248.

In this embodiment, the water nozzle 244 is arranged on the support frame 242, so that the purified water flows into the water storage assembly 30 through the water nozzle 244. In addition, the sensor 40 is mounted on the support frame 242 and can sense the change of the liquid level, so that the water purification assembly 10 is controlled to stop delivering water when the amount of water in the water storage assembly 30 reaches the preset amount of water. The line passing hole 248 on the support frame 242 ensures that the pipeline 50 can pass through the support frame 242.

The first water outlet may be provided on the side wall of the water nozzle 244 to directly deliver water to the water storage assembly 30, or arranged at the end of the water nozzle 244, so that the water flow forms graceful parabolas under the action of gravity to enhance the artistry of the water purifier 1.

In one embodiment of the present disclosure, preferably, the support frame 242 comprises: at least one longitudinal keel provided with the sensor installation position 246 and a line passing hole 248; and at least one transverse keel connected with the longitudinal keel crosswise and provided with a line passing hole 248.

In this embodiment, the support frame 242 is formed by the longitudinal keel and the transverse keel, so that the stability of the support frame 242 is ensured. The longitudinal keel is provided with the sensor installation position 246 to ensure the installation position of the sensor 40, the longitudinal keel is provided with the line passing hole 248 to facilitate the connection of the line 502 of the sensor 40, and the transverse keel is provided with the line passing hole 248 to ensure that the pipeline 50 penetrates through the support frame 242.

Preferably, the support frame 242 includes cross longitudinal keels, and a plurality of circular transverse keels are arranged on the longitudinal keels to ensure the stability of the support frame.

In one embodiment of the present disclosure, preferably, as shown in Fig. 4 and Fig. 5, the bottom of the support frame 242 is provided with a first screw hole 250, and the base 22 is provided with a first mounting hole corresponding to the first screw hole 250.

In this embodiment, the support frame 242 is fixed with the base 22 by a screw to ensure the strength of connection between the support frame 242 and the base 22, and the support frame 242 is easy to install and convenient to maintain.

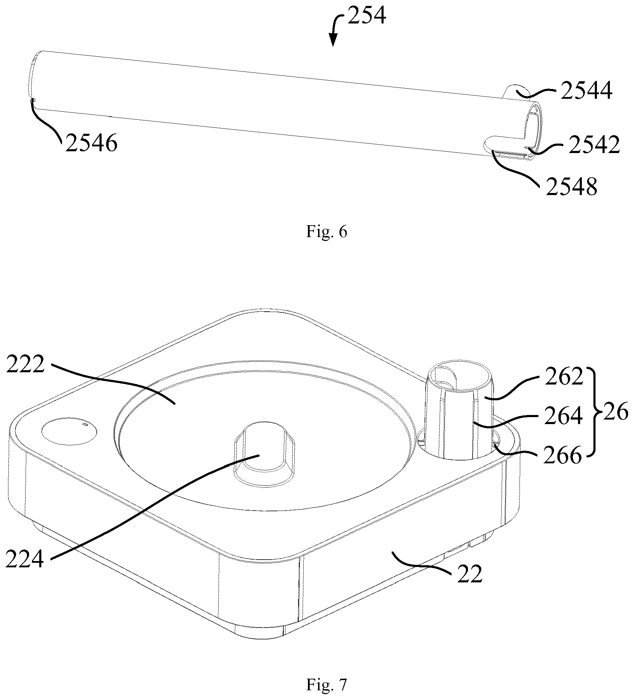

In one embodiment of the present disclosure, preferably, as shown in Fig. 3 and Fig. 6, the upright rod 24 further includes: a decorative rod 254 sleeved outside the support frame 242 and provided with a water nozzle passing hole 2548, the water nozzle 244 penetrating the water nozzle passing hole 2548; and a first decorative cover 252 arranged at the top of the support frame 242.

In this embodiment, the decorative rod 254 is sleeved outside the support frame 242, and the first decorative cover 252 is arranged at the end of the support frame 242, thereby ensuring the aesthetics of the upright rod 24, and protecting the support frame 242, the pipeline 50, the sensor 40 and other components.

In one embodiment of the present disclosure, preferably, as shown in Fig. 6, a first anti-rotating structure 2542 is arranged in the decorative rod 254, and a second anti-rotating structure fitted with the first anti-rotating structure 2542 is arranged on the support frame 242.

In this embodiment, the first anti-rotating structure 2542 is arranged in the decorative rod 254, and the second anti-rotating structure fitted with the first anti-rotating structure 2542 is arranged on the support frame 242, thereby avoiding the rotation of the decorative rod 254 and the support frame 242, and enabling the decorative rod 254 and the support frame 242 to be stably mounted together.

Preferably, the first anti-rotating structure 2542 is an anti-rotating card slot arranged at an end of the decorative rod 254, and the second anti-rotating structure is an anti-rotating rib arranged at an end of the support keel.

In one embodiment of the present disclosure, preferably, as shown in Figs. 2, 3 and 6, the decorative rod 254 is provided with a decorative bulge 2544 at a position opposite to the water nozzle passing hole 2548.

In this embodiment, the decorative rod 254 is provided with the decorative bulge 2544 at the position opposite to the water nozzle passing hole 2548, so that the whole upright rod 24 is more artistic and the aesthetics of the water purifier 1 is improved.

Preferably, the decorative bulge 2544 is shorter than the water nozzle 244.

In one embodiment of the present disclosure, preferably, as shown in Fig. 7, the first connecting portion 26 includes: a connecting pipe 262 arranged on the base 22, the support frame 242 being fitted with the inner side of the connecting pipe 262, and the decorative rod 254 being fitted with the outer side of the connecting pipe 262; a first guiding portion 264 arranged on the connecting pipe 262; and a first positioning structure 266 arranged on the base 22, a second positioning structure 2546 fitted with the first positioning structure 266 being arranged on the decorative rod 254.

In this embodiment, the support frame 242 is inserted into the connecting pipe 262, and the decorative rod 254 is sleeved outside the connecting pipe 262, thereby ensuring the strength of connection between the upright rod 24 and the base 22, covering the connecting pipe 262 and improving the aesthetics of the water purifier 1. The first positioning structure 266 is arranged on the base 22 to cooperate with the second positioning structure 2546 on the decorative rod 254, thereby ensuring a stable connection between the decorative rod 254 and the base 22, and ensuring the stability of connection between the upright rod 24 and the base 22.

Preferably, the first positioning structure 266 includes a plurality of positioning ribs, and the second positioning structure 2546 includes positioning grooves fitted with positioning bulges 718.

In one embodiment of the present disclosure, preferably, as shown in Fig. 7, the base 22 is provided with a mounting hole of the connecting pipe 262, and the connecting pipe 262 protrudes from the mounting hole of the connecting pipe 262. The outer wall of the connecting pipe 262 is spaced from the wall of the mounting hole of the connecting pipe 262, and the first positioning structure 266 is arranged between the outer wall of the connecting pipe 262 and the wall of the connecting pipe 262 mounting hole.

In this embodiment, the base 22 is provided with the connecting pipe 262 mounting hole, the connecting pipe 262 is sunk into the mounting hole, and the decorative rod 254 can stretch into the gap between the outer wall of the connecting pipe 262 and the connecting pipe 262 mounting hole during installation, so that the upright rod 24 and the base 22 are more integral, and the stability of connection between the upright rod 24 and the base 22 is further ensured.

In one embodiment of the present disclosure, preferably, as shown in Fig. 3, the pipeline 50 includes a line 502 connected to the sensor 40, and a water pipe 504 communicating with the water nozzle 244.

In this embodiment, power is supplied to the sensor 40through the line 502, water is delivered to the water nozzle 244 through the water pipe 504, and then water is delivered to the water storage assembly 30 through the water nozzle 244.

Preferably, the water pipe 504 is a PE pipe.

In one embodiment of the present disclosure, preferably, as shown in Fig. 3, the upright rod 24 further includes a hose structure 28 for connecting the water pipe 504 with the water nozzle 244.

In this embodiment, there is an angle between the support pipeline 50 and the water nozzle 244, and the water pipe 504 and the water nozzle 244 connected by a hose can be inserted into two ends of the hose respectively to complete the installation, so that the connection step between the water pipe 504 and the water nozzle 244 is simplified and the hose can play a role of a sealing ring 728, thereby avoiding water leakage at the joint, and avoiding water blockage caused when the water pipe 504 is bent.

Preferably, the hose structure 28 is a bent structure to match the angle between the support frame 242 and the water nozzle 244.The hose structure 28 is a silicone tube.

In one embodiment of the present disclosure, preferably, the cross section of the base 22 is circular, elliptical, polygonal or racetrack-shaped. Both the upright rod 24 and the water nozzle 244 are columnar.

In this embodiment, the upright rod 24 and the water nozzle 244 are columnar, so that the water purifier 1 has a stronger artistic sense. The cross section of the base 22 may be circular, elliptical, polygonal or racetrack-shaped.

Specifically, the cross section of the upright rod 24 may be circular, elliptical, polygonal or racetrack-shaped, and the cross section of the water nozzle 244 may be circular, elliptical, polygonal or racetrack-shaped.

In one embodiment of the present disclosure, preferably, as shown in Figs. 2, 3 and 7, the base 22 is provided with a mounting position 222 of a water storage assembly 30, a third positioning structure 224 is arranged on the mounting position 222 of the water storage assembly 30, a fourth positioning structure 380 matched with the third positioning structure 224 is arranged at the bottom of the water storage assembly 30, and the water storage assembly 30 is arranged on the base 22 and positioned by the third positioning structure 224 and the fourth positioning structure 380.

In this embodiment, the base 22 is provided with the mounting position 222 of the water storage assembly 30, the third positioning structure 224 is arranged on the mounting position 222 of the water storage assembly 30, and the fourth positioning structure 380 is arranged at the bottom of the water storage assembly 30, thereby ensuring the accuracy of the placement position of the water storage assembly 30, and avoiding water splashing caused by inaccurate placement of the water storage assembly 30.

Preferably, the third positioning structure 224 is a bulge 718 structure. Correspondingly, the bottom of the water storage assembly 30 is provided with a positioning groove.

As shown in Fig. 1, in a specific embodiment, the water purifier 1 includes a water purification assembly 10, a water storage assembly 30, a pipeline 50 and a water receiving assembly 20. The water storage assembly 30 is used for storing purified water purified by the water purification assembly, and the water storage assembly 30 is placed on the water receiving assembly 20, and the water receiving assembly 20 is placed on the table 8 to facilitate user's use. The water purification assembly 10 can be placed on or under the table 8.

As shown in Fig. 2 and Fig. 3, in a specific embodiment, the water receiving assembly 20 includes a base 22, a water nozzle 244, a decorative rod 254, a liquid sensor 40, a silicone tube, and a PE pipe. The base 22 is provided with a mounting position and a third positioning structure 224 for placing and positioning the water storage assembly 30.

In a specific embodiment, the bottom of the water storage assembly 30 corresponds to the mounting position on the base 22 in shape, and the bottom groove of the water storage assembly 30 corresponds to the positioning bulge 718 of the base 22 in shape.

As shown in Fig. 4 and Fig. 5, in a specific embodiment, the upright rod 24 includes a support frame 242 and a water nozzle 244 arranged on the support frame 242, which is provided with a sensor installation position 246 for fixing the liquid level sensor 40 and can be inserted into the connecting pipe 262 of the base 22. The hose structure 28 can be installed at the hollow hole position of the water nozzle 244, the other end of the hose structure 28 is connected with the water pipe 504, and the water pipe 504 is connected with the water purification assembly, so that the purified water flows out from the water outlet of the water nozzle 244. The support frame 242 is provided with a line passing hole 248, so that the line 502 and the water pipe 504 can penetrate out of the same hole of the base 22, and are connected with the sensor 40 arranged in the upright rod 24 and the hose structure 28.The decorative rod 254 has an annular up-down opened structure, strong integrity and high mechanical strength, the side wall of its upper end is provided with a water nozzle passing hole 2548 and a stop port for limiting the insertion position of the support frame 242, and the circumferential side of its inner wall is provided with an anti-rotating card slot. The rotation of the support frame 242 can be limited after the support frame 242 is inserted and the anti-rotating rib on the support frame 242 cooperates with the anti-rotating card slot. In addition, a positioning groove is disposed at the bottom of the decorative rod 254, and cooperates with the positioning rib 22 on the base 254 to limit the direction and position of the decorative rod 254.

The water receiving assembly 20 in the water purifier 1 provided by the present disclosure is assembled in such a manner that the PE pipe penetrates the line passing hole 248 of the support frame 242 and is inserted into one end of the silicone tube, and the other end of the silicone tube is inserted into a through hole 366 of the water nozzle 244; the liquid level sensor 40 penetrates the line passing hole 248 and is mounted to the sensor mounting position 246, the assembled components are pushed together from top to bottom into the decorative rod 254, the stop port of the decorative rod 254 cooperates with the first decorative cover 252 on the support frame 242 to limit the push-in position of the support frame 242, the assembled components are inserted into the connecting portion of the base 22, the guide ribs on the circumference of the connecting portion of the base 22 play a role in guiding and cooperation, the positioning grooves of the decorative rod 254 and the positioning ribs of the base 22 cooperate to play a positioning role, and the support frame 242 is fastened with the base 22 by screws to complete the installation.

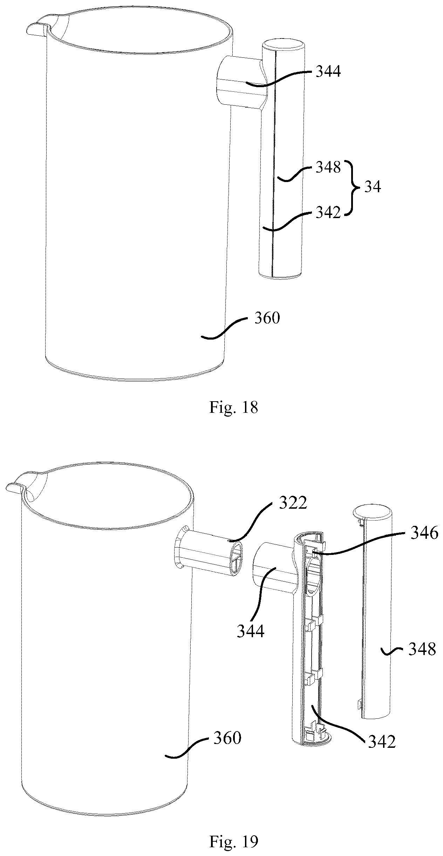

In one embodiment of the present disclosure, preferably, as shown in Figs. 18 to 23, the water storage assembly 30 includes: a water storage component 32 provided with a second connecting portion 322, the floater assembly 60 being arranged in the water storage component 32; and a holding component 34 connected to the water storage component 32.

In this embodiment, the combined water storage component 32 and holding component 34 can be conveniently machined into different colors, thereby enriching the color match between the water storage component 32 and the holding components 34, and satisfying the modern industrial design sense. The multi-color requirement can be realized by simply injecting different color materials into different molds, so the process is simple, the yield is high and the cost is low.

In one embodiment of the present disclosure, preferably, as shown in Figs. 18 to 23, the holding component 34 includes a first shell 342 and a second shell 348 fitted with each other. The first shell 342 is provided with a third connecting portion 344, which is sleeved on the second connecting portion 322.

In this embodiment, since the holding component 34 itself is composed of two shells, the color match of the holding component 34 itself can also be enriched, and the modern industrial design sense is satisfied. Similarly, the multi-color requirement can be realized by simply injecting different color materials into different molds, so the process is simple, the yield is high and the cost is low.

The water purifier 1 provided by the present disclosure is improved for the water storage assembly 30 in the related technology, and the split water storage component 32 and holding component 34 are different in color. In a specific embodiment, the water storage component 32 and the holding component 34 are both injection molded parts, and can be separately molded with different colors during injection molding. As compared with double-color injection molding in the related technology, the cost is reduced and the yield is improved.

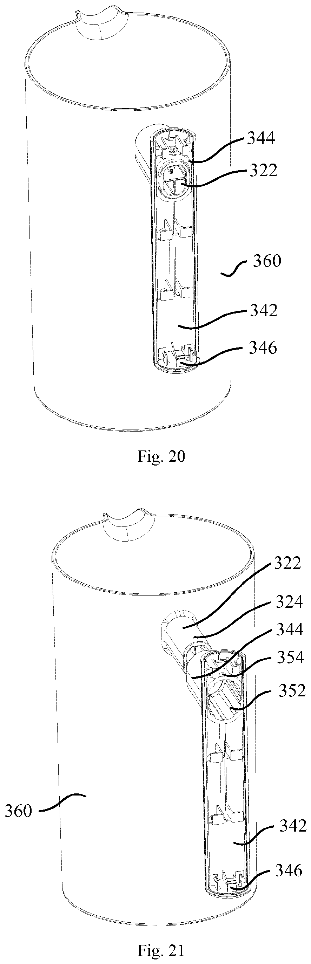

In one embodiment of the present disclosure, preferably, as shown in Fig. 21, the second connecting portion 322 is provided with a second screw hole 324, and the third connecting portion 344 is provided with a second mounting hole 354 at a position corresponding to the second screw hole 324.

In this embodiment, the second connecting portion 322 is fixed with the third connecting portion 344 by a screw to ensure the connection strength there between, and the two connecting portions are easy, fast and convenient to install.

In a specific embodiment, the numbers of the screw hole and the second mounting hole 354 can be randomly set according to actual situations.

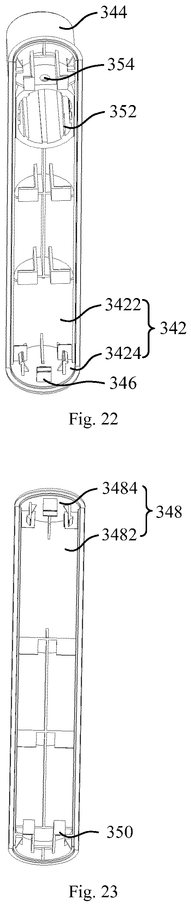

In one embodiment of the present disclosure, preferably, as shown in Figs. 21 and 22, the second mounting hole 354 is located inside the holding component 34.

In this embodiment, the second mounting hole 354 is provided inside the holding component 34, so that a screw-free design is realized on the appearance of the holding component 34, and the aesthetics of the appearance of the water storage assembly is improved.

In one embodiment of the present disclosure, preferably, the first shell 342 and the third connecting portion 344 are of an integrated structure.

In this embodiment, the first shell 342 and the third connecting portion 344 are configured into an integrated structure, thereby satisfying the strength of connection between the first shell 342 and the third connecting portion 344, and simplifying the installation step of the both. Moreover, the integrated first shell 342 and third connecting portion 344 are suitable for mass production with low production cost.

In one embodiment of the present disclosure, preferably, the water storage component 32 and the second connecting portion 322 are of an integrated structure.

In one embodiment of the present disclosure, preferably, the second connecting portion 322 and the third connecting portion 344 are both columnar.

In this embodiment, the second connecting portion 322 and the third connecting portion 344 are columnar to facilitate the sleeving installation of the both. Preferably, the second connecting portion 322 is hollow and a support wall is provided therein to ensure the strength of the second connecting portion 322.

Further, the cross sections of the second connecting portion 322 and the third connecting portion 344 are adaptively circular, elliptical, polygonal or racetrack-shaped, respectively.

In this embodiment, the cross sections of the second connecting portion 322 and the third connecting portion 344 may be circular, elliptical, polygonal or racetrack-shaped.

In one embodiment of the present disclosure, preferably, as shown in Fig. 22, the outer wall of the second connecting portion 322 is provided with a second guiding portion, and the inner wall of the third connecting portion 344 is provided with a third guiding portion 352 fitted with the second guiding portion.

In this embodiment, the second connecting portion 322 is provided with a second guiding portion, and the third connecting portion 344 is provided with a third guiding portion 352, so that the second connecting portion 322 is sleeved with the third connecting portion 344 more smoothly. Moreover, the cooperation between the second guiding portion and the third guiding portion 352 can achieve the positioning effect to avoid run out between the second connecting portion 322 and the third connecting portion 344.

Preferably, the second guiding portion is a convex rib, the third guiding portion 352 is a slide rail, and the numbers of the convex rib and the slide rail can be randomly set according to actual situations.

In one embodiment of the present disclosure, preferably, as shown in Fig. 22, the first shell 342 is provided with at least one fourth connecting portion 346, and the second shell 348 is provided with at least one fifth connecting portion 350 fitted with the fourth connecting portion 346.

In this embodiment, the installation of the holding component 34 is completed by the fitting connection of the fourth connecting portion 346 and the fifth connecting portion 350, so the installation process is convenient without excessive installation steps, and the assembly speed is improved.

In one embodiment of the present disclosure, preferably, the holding component 34 composed of a plurality of shells is columnar; the first shell 342 includes a first side wall 3422 and a bottom wall 3424 connected to the first side wall 3422, each of the first side wall 3422 and the bottom wall 3424 being provided with a fourth connecting portion 346; and the second shell 348 includes a second side wall 3482 and a top wall 3484 connected to the second side wall 3482, each of the second side wall 3482 and the top wall 3484 being provided with a fifth connecting portion 350.

In this embodiment, the artistry and the holding feeling of the handle are improved by providing the shells with a columnar structure. The first shell 342 composed of the first side wall 3422 and the bottom wall 3424 connected to the first side wall 3422 cooperates with the second shell 348 composed of the second side wall 3482 and the top wall 3484 connected to the second side wall 3482, thereby ensuring that the handle includes two shells, facilitating the injection molding of the first shell 342 and the second shell 348, reducing the difficulty of installation, and ensuring the integrity of the plurality of shells after installation.

In one embodiment of the present disclosure, preferably, the holding component 34 composed of a plurality of shells is columnar; the first shell 342 includes a first side wall 3422 and a top wall 3484 connected to the first side wall 3422, each of the first side wall 3422 and the top wall 3484 being provided with a fourth connecting portion 346; and the second shell 348 includes a second side wall 3482 and a bottom wall 3424 connected to the second side wall 3482, each of the second side wall 3482 and the bottom wall 3424 being provided with a fifth connecting portion 350.

In this embodiment, the artistry and the holding feeling of the handle are improved by providing the shells with a columnar structure. The first shell 342 composed of the first side wall 3422 and the top wall 3484 connected to the first side wall 3422 cooperates with the second shell 348 composed of the second side wall 3482 and the bottom wall 3424 connected to the second side wall 3482, thereby ensuring that the handle includes two shells, facilitating the injection molding of the first shell 342 and the second shell 348, reducing the difficulty of installation, and ensuring the integrity of the plurality of shells after installation.

Preferably, the first side wall 3422 and the second side wall 3482 are arc walls.

In one embodiment of the present disclosure, preferably, a plurality of fourth connecting portions 346 are arranged inside the first shell 342 symmetrically about the central axis of the holding component 34, and a plurality of fifth connecting portions 350 are arranged inside the second shell 348 symmetrically about the central axis of the holding component 34.

In this embodiment, the plurality of fourth connecting portions 346 and the plurality of fifth connecting portions 350 are arranged symmetrically about the central axis of the shells, thereby ensuring the connection strength after the first shell 342 and the second shell 348 are installed, avoiding local gaps and ensuring the aesthetics of the appearance of the handle.

The specific quantities of the fourth connecting portions 346 and the fifth connecting portions 350 may be arbitrarily set according to the size of the holding component 34 and the like.

In one embodiment of the present disclosure, preferably, the fourth connecting portion 346 is a buckle, and the fifth connecting portion 350 is a card slot fitted with the fourth connecting portion 346.

In another embodiment of the present disclosure, preferably, the fourth connecting portion 346 is a card slot, and the fifth connecting portion 350 is a buckle fitted with the fourth connecting portion 346.

In another embodiment of the present disclosure, preferably, the fourth connecting portion 346 is an insert, and the fifth connecting portion 350 is a slot fitted with the fourth connecting portion 346.

In another embodiment of the present disclosure, preferably, the fourth connecting portion 346 is a slot, and the fifth connecting portion 350 is an insert fitted with the fourth connecting portion 346.

In this embodiment, the first shell 342 is connected with the second shell 348 by the engagement of the buckle and the card slot or the insert and the slot, thereby reducing the difficulty of installation of the first shell 342 and the second shell 348, and improving the installation speed between the first shell 342 and the second shell 348.

As shown in Figs. 18 and 19, in a specific embodiment, the water storage assembly 30 includes a water storage component 32 and a holding component 34.The holding component 34 includes a top wall 3484 and a side wall, the water storage component 32 is a cylinder, and a cylindrical second connecting portion 322, which is provided with a screw hole and fastened with the holding component 34 by a screw, protrudes from the side wall.

As shown in Fig. 19 to Fig. 23, in a specific embodiment, the first shell 342 and the third connecting portion 344 are sleeved on the second connecting portion 322, the second connecting portion 322 and the third connecting portion 344 are fastened by screws from top to bottom through two mounting holes, then the second shell 348 is pushed from top to bottom into the first shell 342, and the first shell 342 and the second shell 348 are pulled close through the cooperation of the fourth connecting portions 346 and the fifth connecting portions 350 in different directions. Preferably, respective three fourth connecting portions 346 are adopted at the upper and lower ends to ensure that the first shell 342 and the second shell 348 have sufficient connection strength, and the first shell 342 and the second shell 348 are tensioned in the upper, lower, front and rear directions to improve the fastening reliability thereof.

As shown in Fig. 22, in a specific embodiment, the third connecting portion 344 is provided in the middle of the first shell 342, a through hole 366 is provided in the third connecting portion 344, a guide rib matched with the second connecting portion 322 on the water storage assembly 30 is arranged on the inner wall of the third connecting portion 344, a part of the second connecting portion 322 is located on the back of the first shell 342,which is provided with a second mounting hole 354 and is fastened with the second connecting portion 322 by a screw, and the first shell 342 includes a semi-cylindrical side wall and a bottom wall 3424.Preferably, respective three fourth connecting portions 346 are adopted at the upper and lower ends to ensure that the first shell 342 and the second shell 348 have sufficient connection strength, and the first shell 342 and the second shell 348 are tensioned in the upper, lower, front and rear directions to improve the fastening reliability thereof.

As shown in Fig. 23, in a specific embodiment, the second shell 348 includes a semi-cylindrical side wall and a top wall 3484.Preferably, respective three fifth connecting portions 350 are adopted at the upper and lower ends to ensure that the first shell 342 and the second shell 348 have sufficient connection strength, and the first shell 342 and the second shell 348 are tensioned in the upper, lower, front and rear directions to improve the fastening reliability thereof.

In one embodiment of the present disclosure, preferably, as shown in Figs. 8 to 10, the water storage component 32 includes: a water tank body 360 having an opening at the top thereof; and a water tank cover 364 covering the opening of the water tank body 360.

In this embodiment, the water storage component 32 is composed of the water tank body 360 and the water tank cover 364, the water tank cover 364 can be opened to clean the water storage component 32, and the water tank cover 364 can be closed during water storage to prevent dust and sundries from falling into the water storage component 32 and ensure clean water storage. A convex edge is provided on the circumference of the top of the water tank cover 364, the water tank cover 364 partially stretches into the water tank body 360 to form a limit between the water tank cover 364 and the water tank body 360 through the convex edge, and it is convenient for the user to take the water tank cover 364.

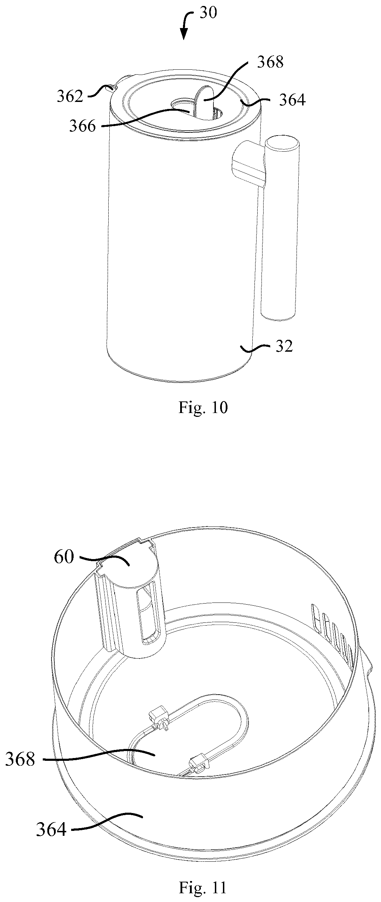

In one embodiment of the present disclosure, preferably, as shown in Figs. 8 and 10, the top of the water tank cover 364 is provided with a through hole 366 through which the water receiving assembly 20 delivers water to the water tank main body 360.

In this embodiment, the top of the water tank cover 364 is provided with a through hole 366 through which the water receiving assembly 20 delivers clean water to the water storage assembly 30, so that the water storage assembly 30 does not need to be opened when storing water, dust and sundries are further prevented from falling into the water storage assembly 30, and clean water storage is ensured.

Preferably, the through hole 366 may be circular, polygonal, elliptical or the like.

In one embodiment of the present disclosure, preferably, the water tank body 360 is provided with a second water outlet, the water tank cover 364 is provided with a third water outlet matching the second water outlet, and the water tank is provided with a water outlet nozzle 362 on the outer wall of the circumferential side of the second water outlet. The second water outlet may be provided at the end of the water tank body 360 to form an opening, or provided on the side wall of the water tank body 360, so that the side wall of the water tank body 360 surrounds the second water outlet to form an independent opening.

In this embodiment, when a user pours water, the purified water is accurately guided into the user's water container from the water outlet nozzle 362 through the second water outlet and the third water outlet, which is convenient for the user to use.

In one embodiment of the present disclosure, preferably, as shown in Figs. 11, 13 and 14, the floater assembly 60 is arranged on the inner side wall of the water tank cover 364, which is provided with a sixth connecting portion, and the floater assembly 60 is provided with a seventh connecting portion fitted with the sixth connecting portion.

In this embodiment, the floater assembly 60 is arranged within the water tank cover 364. The water tank cover 364 covers the top of the water tank body 360, and the floater assembly 60 is arranged on the water tank cover 364, so that the height of the floater assembly 60 within the water storage component 32 is ensured, and the water storage component 32 is ensured to have sufficient water storage capacity.

Specifically, the sixth connecting portion includes slide rails provided on two sides of the floater box 62 and buckles provided at the bottom of the floater box 62; the seventh connecting portion includes slide supports provided on the water tank cover 364, and card slots; or the sixth connecting portion includes slide supports provided on two sides of the floater box 62 and card slots provided at the bottom of the floater box 62; and the seventh connecting portion includes slide rails provided on the water tank cover 364, and buckles.

In this embodiment, the floater assembly 60 is quickly connected and fixed with the water tank cover 364 through the fitted card slots and buckles, as well as the fitted slide supports and slide rails.

In another embodiment, the sixth connecting portion includes buckles or card slots provided at two ends of the floater box 62, and the seventh connecting portion includes two buckles or card slots provided on the water tank cover 364.

In this embodiment, the floater assembly 60 is quickly connected and fixed with the water tank cover 364 through the fitted card slots and buckles.

In one embodiment of the present disclosure, preferably, as shown in Fig. 8 to Fig. 12 and Fig. 14, the water storage assembly 30 further includes a dial block 368 movably arranged at the through hole 366 to open or close the through hole 366.

In this embodiment, the movable dial block 368 is arranged at the through hole 366, the dial block 368 is opened when water is received to expose the through hole 366, the water enters the water storage assembly 30 through the through hole 366, and the dial block 368 can be moved after the water is full to close the through hole 366, thereby ensuring the cleanness of the water in the water storage assembly 30.

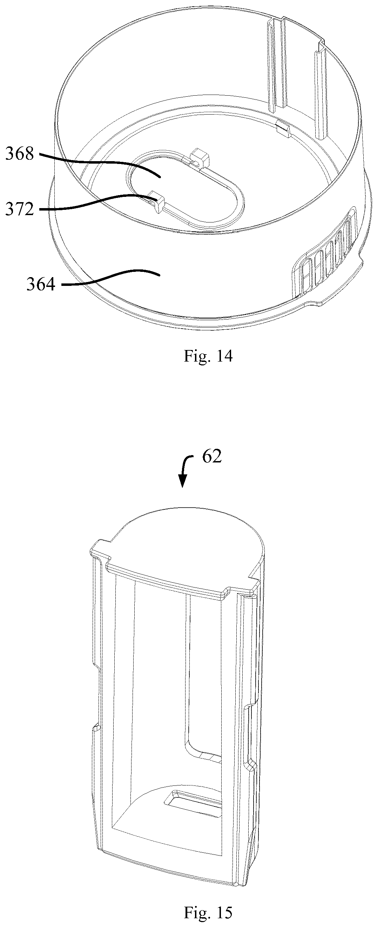

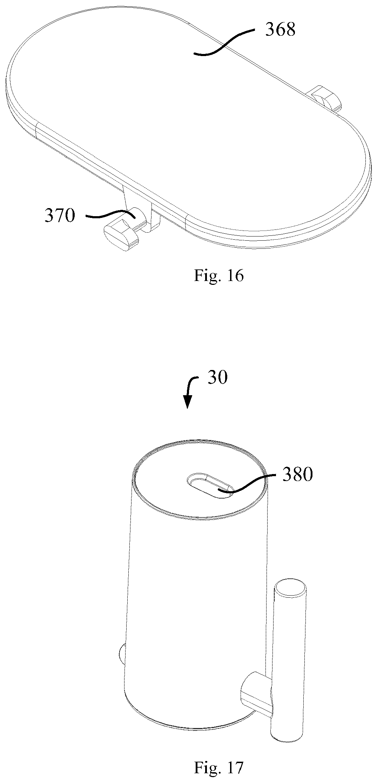

Preferably, as shown in Fig. 14 and Fig. 16, the water tank cover 364 is provided with a rotating shaft 370, and the dial block 368 is provided with a shaft hole 372 fitted with the rotating shaft 370. Alternatively, the water tank cover 364 is provided with a shaft hole 372, and the dial block 368 is provided with a rotating shaft 370 fitted with the rotating shaft 370. Alternatively, the water tank cover 364 is provided with a slide rail, and the dial block 368 is provided with a slide support fitted with the rotating shaft 370. Alternatively, the water tank cover 364 is provided with a slide support, and the dial block 368 is provided with a slide rail fitted with the rotating shaft 370.

In this embodiment, the rotating connection of the dial block 368 and the water tank cover 364 is achieved by the fit of the rotating shaft 370 and the shaft hole 372. Alternatively, the sliding connection of the dial block 368 and the water tank cover 364 is achieved by the sliding fit of the slide rail and the slide support, so that the user can conveniently open or close the dial block 368. The dial block 368 is connected with the water tank cover 364, and thus, is prevented from being lost.

In one embodiment of the present disclosure, preferably, the dial block 368 is provided with a first limiting portion for limiting the moving direction and the rotating angle of the dial block 368, and/or the water tank cover 364 is provided with a first limiting portion for limiting the moving direction and the rotating angle of the dial block 368.

In this embodiment, the dial block 368 and/or the water tank cover 364 are provided with the limiting structures to ensure the exposed position of the through hole 366, and when the water receiving assembly 20 delivers water to the water storage assembly 30, the water enters the water storage assembly 30 from a fixed position to avoid splashing out of the water storage assembly 30.

In another embodiment of the present disclosure, preferably, the water storage assembly 30 further includes a plug that is plug ably disposed at the through hole 366 to open or close the through hole 366.

In this embodiment, a pluggable plug is arranged at the through hole 366, the plug is pulled out when water is received to expose the through hole 366, the water enters the water storage assembly 30 through the through hole 366, and the plug can be inserted after the water is full to close the through hole 366, thereby ensuring the cleanness of the water in the water storage assembly 30.

Preferably, the plug is provided with a handle.

In this embodiment, the plug is provided with a handle so that the user holds the plug conveniently.

In one embodiment of the present disclosure, preferably, the water tank body 360 is cylindrical, and the cross section of the water tank body 360 is in the shape of one or more of a circle, an ellipse, a polygon and a racetrack.

Specifically, the water tank body 360 may be in a stretched shape of a single graph, e.g., a cylindrical shape, or a gradient between a plurality of graphs, e.g., the bottom surface is quadrangular, the top surface is circular, the side wall of the entire water tank body 360 transits between the two graphs. Alternatively, the side wall can also transit among three or four graphs.

In this embodiment, the water tank body 360 is cylindrical such that the entire water storage assembly 30 is artistic, and the cross section of the water tank body 360 is in any shape of a circle, an ellipse, a polygon and a racetrack, or is converted among multiple graphs.

As shown in Fig. 18 to Fig. 27, in a specific embodiment, the water storage assembly 30 includes a water tank body 360, a floater box 62, a floater 64, a water tank cover 364, and a dial block 368.The floater 64 in the water storage assembly 30 can float up and down with the liquid level, which is sensed by the sensor arranged in the water receiving assembly 20 to detect the water level. Alternatively, the floater 64 and the floater box 62 themselves sense the liquid level, and when the floater 64 reaches a preset position with the liquid level, the floater 64 or the floater box 62 is triggered to emit a radio signal so as to trigger the water purification assembly 10 to stop delivering water to the water storage assembly 30.The floater 64 is a magnetic floating ball or an electronically controlled floating ball, and the dial block can be opened to receive water, and can be closed after the water is received. The water tank body 360 is provided with a water outlet, which can be directly taken out from a water tank seat for pouring water; and the water tank cover 364 can be taken out from the water tank to facilitate cleaning of the water tank and the water tank cover 364.

In a specific embodiment, the floater assembly 60 is installed by first loading the floater 64 into the floater box 62, and pushing the floater box 62 and the floater 64 along card slots on the water tank cover 364, wherein the floater box 62 and the water tank cover 364 are provided with buckles and card slots respectively, and the buckles are clamped into the card slots after the floater assembly 60 reaches a preset position to realize the connection and fixing of the floater assembly 60 and the water tank cover 364.

In a specific embodiment, the water tank cover 364 is circumferentially provided with ribs 708 matched with the water tank body 360, provided with card slots and buckles on the inner side surface, and provided with dial block buckling positions and dial block shaft holes 372 in the middle. The dial block can rotate along the shaft holes 372 after being pushed into the shaft holes 372 to open the box.

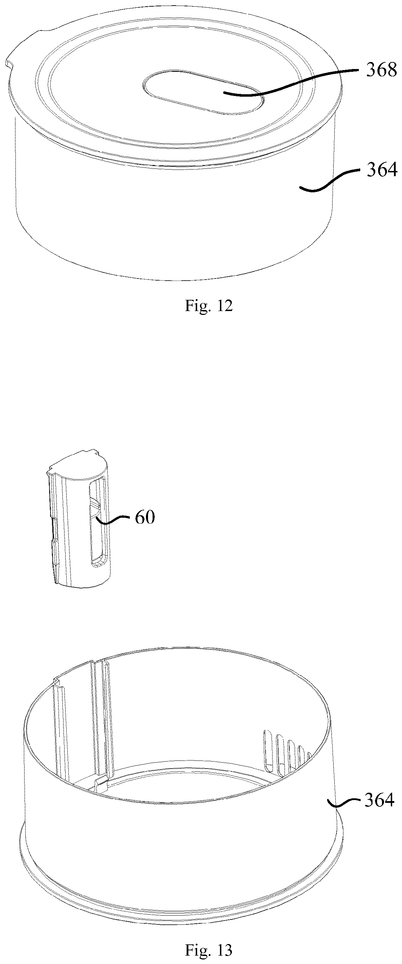

As shown in Fig. 13 to Fig. 15, in a specific embodiment, guide ribs are arranged on the outer part of the floater box 62 and can be pushed into the card slots of the water tank cover 364, and buckle grooves are provided at the bottom of the floater box 62, and adapted to the buckles in the water tank cover 364.

In a specific embodiment, cylindrical rotating shafts 370 are provided on two sides of the dial block 368, and limiting ribs are provided on two sides of the dial block 368 to limit the dial block 368 to be pulled down only to a certain angle.

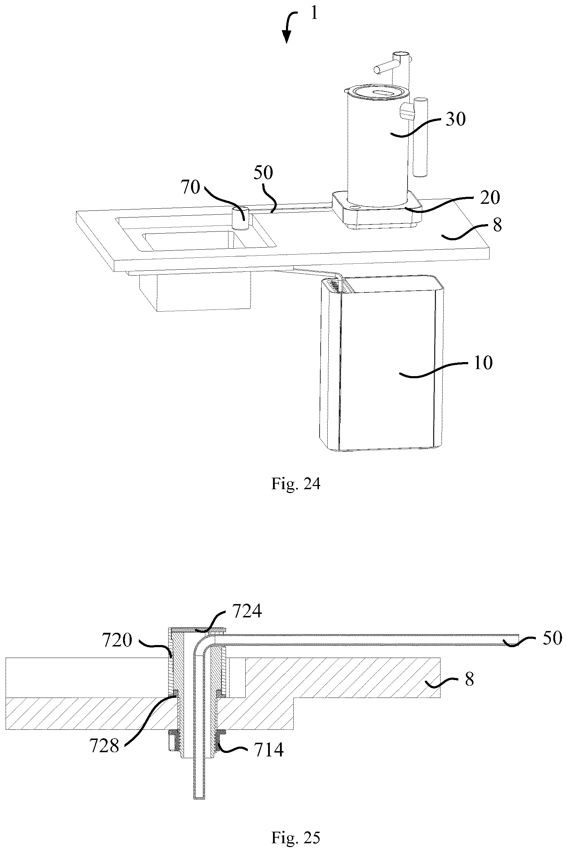

In one embodiment of the present disclosure, preferably, as shown in Figs. 24 to 32, the water purifier further includes a line passing assembly 70, which includes a line passing pipe 702. The line passing pipe 702 is provided with a second limiting portion 710, and the pipeline 50 passes through the line passing pipe 702.

In this embodiment, the line passing assembly 70 blocks a hole formed in the table 8 to allow the pipeline 50 to pass, the limiting portion is overlapped to the table 8, and the line passing pipe 702 penetrates the hole in the table 8, thus preventing the sundries or liquid on the table 8 from falling down the table 8 to reduce the user's cleaning pressure.

The water purifier 1 provided by the present disclosure is improved from the water purifier 1 in the related technology, and the water purifier 1 in the related technology is usually arranged in a kitchen, located under a water trough, and connected to a faucet to discharge water through the faucet. The water purifier 1 provided by the present application is provided with a water receiving assembly 20 on the basis of water purification under the table and water discharge above the table, instead of water discharge from the faucet in the related technology, so that the use range of the water purifier 1 is enlarged. Additionally, it is inevitable to provide a hole in the table 8 when water is delivered by the pipeline 50. For this, in the present application, the hole in the table 8 is blocked by the line passing assembly 70, a part of the line passing pipe 702 penetrates the hole, and the second limiting portion 710 is overlapped to the edge of the hole to realize the blocking between the hole and the table 8, thereby preventing the sundries or liquid on the table 8 from falling down the table 8 to reduce the user's cleaning pressure. The second limiting portion 710 and the line passing pipe 702 are integrated or split.

In a specific embodiment, the second limiting portion 710 is arranged in the middle of the line passing pipe 702. Specifically, the second limiting portion 710 is a limiting bulge 718 surrounding the line passing pipe 702.

In one embodiment of the present disclosure, preferably, as shown in Figs. 25-28, the line passing assembly 70 further includes a connector 714,which is provided with an eighth connecting portion 716.The line passing pipe 702 is provided with a ninth connecting portion 704 fitted with the eighth connecting portion 716.

In this embodiment, the table 8 is located between the limiting portion and the connector 714 by the cooperation of the line passing pipe 702 and the connector 714, so that the line passing assembly 70 is firmly fixed on the table 8 to ensure the reliability that the line passing assembly 70 blocks the hole of the table 8, and facilitate the maintenance and replacement of the line passing assembly 70.

In one embodiment of the present disclosure, preferably, as shown in Figs. 25 to 28, the line passing assembly 70 includes a line passing pipe 702 that penetrates a hole provided in the table 8 and is fixed there by a connector 714, the end face of the line passing pipe 702 is higher than the upper surface of the table 8, and the connector 714 is connected with the line passing pipe 702 through an eighth connecting portion 716 provided on the connector 714 and a ninth connecting portion 704 provided on the line passing pipe 702. In addition, the pipeline 50 passes through the line passing pipe 702 and the connector 714.

Specifically, the eighth connecting portion 716 and the ninth connecting portion 704 may be a buckle and a card slot, the line passing pipe 702 is provided with a plurality of buckles and card slots, and the connector 714 is provided with the other ones of the buckles or card slots, that is, the appropriate clamping position can be selected according to the thickness of the table 8. Thus, the installation is convenient, and the installation and maintenance of the line passing assembly 70 are facilitated. Alternatively, the eighth connecting portion 716 and the ninth connecting portion 704 may also be an insert and a slot, the line passing pipe 702 is provided with a plurality of inserts and slots, and the connector 714 is provided with the other ones of the inserts or slots, that is, the appropriate inserting position can be selected according to the thickness of the table 8. Thus, the installation is convenient, and the installation and maintenance of the line passing assembly 70 are facilitated. Optionally, the eighth connecting portion 716 and the ninth connecting portion 704 are of a first thread structure and a second thread structure fitted with each other, and the thread fitting distance can be adjusted according to the thickness of the table 8. Accordingly, the installation is convenient, and the installation and maintenance of the line passing assembly 70 are facilitated.

Preferably, the first thread structure starts from one end of the line passing pipe 702 and covers a part of the line passing pipe 702.

In one embodiment of the present disclosure, preferably, as shown in Figs. 25 to 28, the eighth connecting portion 716 is of a first thread structure, and the ninth connecting portion 704 is of a second thread structure fitted with the first thread structure.

In this embodiment, the line passing pipe 702 is connected with the connector 714 by the thread structures, so that the installation of the line passing pipe 702 and the connector 714 is more convenient, and the installation and maintenance of the line passing assembly 70 are facilitated. Moreover, the length of thread connection can be automatically adjusted according to the thickness of the table 8, so the adaptability is good.

In one embodiment of the present disclosure, preferably, as shown in Figs. 25-29, the line passing assembly 70 further includes a decorative ring 720 sleeved on a part of the line passing pipe 702 above the upper surface of the table 8.

In this embodiment, the aesthetics of the line passing assembly 70 is improved by the decorative ring 720, and the shape of the decorative ring 720 can be arbitrarily set as desired, for example, cylindrical, spherical or the like.

More preferably, a first opening 706 is provided at one end of the outer wall of the line passing pipe 702, a second opening 722 is provided at a position of the decorative ring 720 corresponding to the first opening 706, and the pipeline 50 passes through the first opening 706 and the second opening 722.

In this embodiment, the line 502 can horizontally pass along the table 8 through the first opening 706 and the second opening 722 on the table 8, so that the water flow is prevented from being clogged by bending of the pipeline 50 at the end of the line passing pipe 702, the pipeline 50 is arranged more tidily, and the damage of the pipeline 50 extending beyond the top of the line passing pipe 702 is avoided.

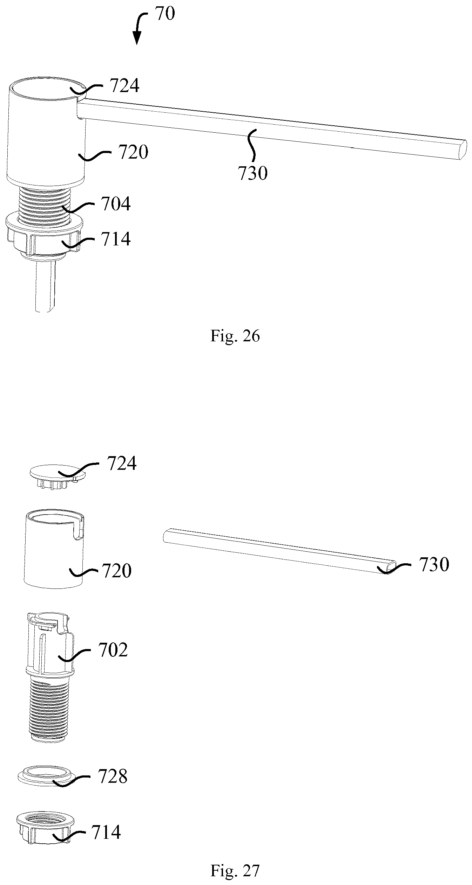

In one embodiment of the present disclosure, preferably, as shown in Figs. 27 to 30, the line passing pipe 702 is axially provided with a rib position 708 or a flat position at a position where the first thread structure is not arranged. A tenth connecting portion 726 fitted with the rib position or the flat position is provided in the decorative ring.

In this embodiment, the control on the line passing pipe 702 is increased by the rib position 708 or the flat position. When the line passing pipe 702 and the connector 714 are installed, the control on the line passing pipe 702 can be improved by clamping the rib position 708 or the flat position. The line passing pipe 702 is fixed to the table 8 by the connector 714, which reduces the difficulty of installing the line passing assembly 70.

Preferably, the second limiting portion 710 is connected with the rib position 708.

In this embodiment, the rib position 708 supports the second limiting portion 710 to increase the strength of the second limiting portion 710.

In one embodiment of the present disclosure, preferably, as shown in Figs. 25-28 and 32, the line passing assembly 70 further includes a second decorative cover 724 arranged at one end of the line passing pipe 702.The second decorative cover 724 is provided with an eleventh connecting portion 712, and the line passing pipe 702 is provided with a twelfth connecting portion fitted with the eleventh connecting portion 712.

In this embodiment, the second decorative cover 724 is arranged at one end of the line passing pipe 702 to block the end of the line passing pipe 702, thereby improving the blocking ability against sundries and liquid, and improving the aesthetics of the line passing assembly 70. In addition, the pipeline 50 can be compressed by a decorative rod 254 such that the pipeline 50 is arranged more tidily.

Further, the decorative ring 720 abuts against the second decorative cover 724, and the second decorative cover 724 limits the decorative ring 720. At this time, the second limiting portion 710 may be the decorative ring 720, or a limiting bulge 718 or a limiting rib integrated with the line passing pipe 702.

In one embodiment of the present disclosure, preferably, the eleventh connecting portion 712 is a buckle, and the twelfth connecting portion is a card slot fitted with the eleventh connecting portion 712.

In one embodiment of the present disclosure, preferably, the eleventh connecting portion 712 is a card slot, and the twelfth connecting portion is a buckle fitted with the eleventh connecting portion 712.

In one embodiment of the present disclosure, preferably, the eleventh connecting portion 712 is an insert, and the twelfth connecting portion is a slot fitted with the eleventh connecting portion 712.

In one embodiment of the present disclosure, preferably, the eleventh connecting portion 712 is a slot, and the twelfth connecting portion is an insert fitted with the eleventh connecting portion 712.

In one embodiment of the present disclosure, preferably, the eleventh connecting portion 712 and the twelfth connecting portion are of fitted thread structures. The threads may be internal or external threads.

In one embodiment of the present disclosure, preferably, the line passing assembly 70 further includes a sealing ring 728, which is sleeved on the line passing pipe 702 and located below the second limiting portion 710.

In this embodiment, the joint between the table 8 and the limiting portion is sealed by the sealing ring 728 to further improve the blocking effect on the liquid and improve the blocking effect of the line passing assembly 70 on sundries and liquid.

In one embodiment of the present disclosure, preferably, as shown in Figs. 25, 27 and 28, the connector 714 is provided with bulges 718 or grooves.

In this embodiment, the control on the connector 714 is improved by the projections 718 or grooves on the connector 714, thereby reducing the difficulty of installing the line passing assembly 70.

In one embodiment of the present disclosure, preferably, as shown in Fig. 24 to Fig. 28, the water purifier further includes a protection pipe 730 penetrating the line passing assembly 70, the pipeline 50 is arranged in the protection pipe 730, and the protection pipe 730 is connected with the water receiving assembly 20.

In this embodiment, the protection pipe 730 protects the pipeline 50 from being damaged, and can be appropriately decorated according to user's home decoration.

As shown in Fig. 24, in a specific embodiment, the water purifier 1 provided by the present disclosure includes a water purification assembly 10, a water receiving assembly 20, a water storage assembly 30, a pipeline 50 and a line passing assembly 70. The water purification assembly 10 is placed under the table, the water receiving assembly 20 is placed on the table, the water storage assembly 30 is placed on the water receiving assembly 20, the water purification assembly 10 is connected with the water tank by the pipeline 50, the kitchen table 8 is provided with a hole, the line passing assembly 70 is installed at the hole, and the pipeline 50 penetrates the line passing assembly 70 and is connected to the water purification assembly 10 and the water receiving assembly 20. When the amount of water in the water storage assembly 30 reaches a preset amount of water, the water purification assembly 10 stops delivering water to the water storage assembly 30. The pipeline 50 includes a water pipe 504 through which purified water is delivered and a line 502 through which electric signals is transmitted.

As shown in Figs. 25-32, in a specific embodiment, the line passing assembly 70 includes a second decorative cover 724, a decorative ring 720, a line passing pipe 702, a sealing ring 728, and a connector 714. The connector 714 is a connecting nut.

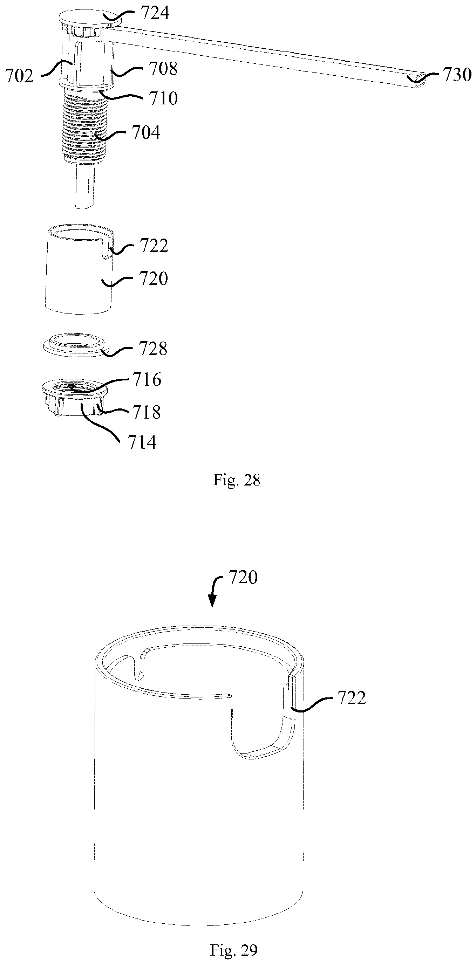

As shown in Fig. 27 and Fig. 29, in a specific embodiment, the pipe wall at one end of the decorative ring 720 is provided with a second opening 722 through which the pipeline assembly passes, and the upper part of the pipe wall is provided with a stop port which is matched with the second decorative cover 724 and limits the second decorative cover 724.The second decorative cover 724 and the decorative ring 720 are bidirectionally limited, and are internally provided with card slots matched with the rib positions 708 on the line passing pipe 702 to guide and limit the rotation of the bolt.

In a specific embodiment, two buckles are provided on the back of the second decorative cover 724, can be pushed into the card slots provided on the line passing pipe 702 in parallel, and are limited by the ribs, so that the second decorative cover 724 is fastened with the line passing pipe 702.

Specifically, the installation method is that the pipeline passes through the line passing pipe 702, the second decorative cover 724 is pushed into the card slots of the line passing pipe 702 to clamp the pipeline, the installed pipeline 50, line passing pipe 702 and second decorative cover 724 are inserted with the decorative ring 720, then sleeved with the sealing ring 728 and penetrate the hole in the table 8, and the decorative ring 720 and the sealing ring 728 are locked by the connecting nut.

In the present disclosure, the terms "installed", "connected", "fixed" and the like all should be generally understood. For example, the "connected" may be fixedly connected, detachably connected, integrally connected, directly connected or indirectly connected by a medium. Those of ordinary skill in the art can understand the specific meanings of the above terms in the present disclosure according to specific circumstances.

In the description of this specification, the terms "one embodiment", "some embodiments", "a specific embodiment" and the like mean that specific features, structures, materials or characteristics described in conjunction with the embodiments or examples are included in the at least one embodiment or example of the present disclosure. In this specification, the illustrative descriptions of the above terms do not necessarily refer to the same embodiment or example. Moreover, the specific features, structures, materials or characteristics described may be combined appropriately in one or more embodiments or examples.

Described above are merely preferred embodiments of the present disclosure, and the present disclosure is not limited thereto. Various modifications and variations may be made to the present disclosure for those skilled in the art. Any modification, equivalent substitution or improvement made within the spirit and principle of the present disclosure shall fall into the protection scope of the present disclosure.

## Claims

1. A water purifier, comprising:
a water purification assembly;
a water receiving assembly connected with the water purification assembly by a pipeline;
a water storage assembly arranged on the water receiving assembly, the water purification assembly delivering water to the water storage assembly through the water receiving assembly; and
a sensor arranged in the water receiving assembly and being configured to detect the amount of water in the water storage assembly;
wherein, when the sensor detects that the amount of water in the water storage assembly reaches a preset amount of water, the water purification assembly is controlled to stop delivering water.

2. The water purifier according to claim 1, further comprising:
a floater assembly arranged in the water storage assembly;
wherein the sensor detects the amount of water in the water storage assembly by detecting the floater assembly.

3. The water purifier according to claim 2, wherein the floater assembly comprises:
a floater box; and
a floater movably arranged in the floater box, the sensor detecting the amount of water in the water storage assembly by detecting the position of the floater.

4. The water purifier according to claim 1, wherein the water receiving assembly comprises:
a base provided with a first connecting portion; and
an upright rod fitted with the first connecting portion.

5. The water purifier according to claim 4, wherein the upright rod comprises:
a support frame provided with a sensor mounting position and a line passing hole, one end of the support frame being fitted with the first connecting portion; and
a water nozzle arranged on the support frame and provided with a first water outlet;
wherein the sensor is arranged at the sensor mounting position, and the pipeline passes through the line passing hole.

6. The water purifier according to claim 5, wherein the support frame comprises:
at least one longitudinal keel provided with the sensor mounting position and the line passing hole; and
at least one transverse keel connected with the longitudinal keel crosswise and provided with the line passing hole.

7. The water purifier according to claim 5, wherein
the bottom of the support frame is provided with a first screw hole, and the base is provided with a first mounting hole corresponding to the first screw hole.

8. The water purifier according to claim 5, wherein the upright rod further comprises:
a decorative rod sleeved outside the support frame and provided with a water nozzle passing hole through which the water nozzle passes; and
a first decorative cover arranged at the top of the support frame.

9. The water purifier according to claim 8, wherein
a first anti-rotating structure is arranged in the decorative rod; and
a second anti-rotating structure fitted with the first anti-rotating structure is arranged on the support frame.

10. The water purifier according to claim 8, wherein
the decorative rod is provided with a decorative bulge at a position opposite to the water nozzle passing hole.

11. The water purifier according to claim 10, wherein the first connecting portion comprises:
a connecting pipe arranged on the base, the support frame being fitted with the inner side of the connecting pipe, and the decorative rod being fitted with the outer side of the connecting pipe;
a first guiding portion arranged on the connecting pipe; and
a first positioning structure arranged on the base, a second positioning structure fitted with the first positioning structure being arranged on the decorative rod.

12. The water purifier according to claim 11, wherein
the base is provided with a connecting pipe mounting hole, and the connecting pipe protrudes from the connecting pipe mounting hole;
the outer wall of the connecting pipe is spaced from the wall of the connecting pipe mounting hole, and the first positioning structure is arranged between the outer wall of the connecting pipe and the wall of the connecting pipe mounting hole.

13. The water purifier according to any one of claims 5 to 12, wherein the pipeline comprises:
a line connected with the sensor; and
a water pipe communicating with the water nozzle.

14. The water purifier according to claim 13, wherein the upright rod further comprises:
a hose structure connected to the water pipe and the water nozzle.

15. The water purifier according to any one of claims 5 to 12, wherein
the cross section of the base is circular, elliptical, polygonal or racetrack-shaped; and
the upright rod and the water nozzle are both columnar.

16. The water purifier according to any one of claims 4 to 12, wherein
the base is provided with a water storage assembly mounting position, a third positioning structure is arranged on the water storage assembly mounting position, a fourth positioning structure matched with the third positioning structure is arranged at the bottom of the water storage assembly, and the water storage assembly is arranged on the base and positioned by the third positioning structure and the fourth positioning structure.

17. The water purifier according to any one of claims 2 to 12, wherein the water storage assembly comprises:
a water storage component provided with a second connecting portion, the floater assembly being arranged in the water storage component; and
a holding component connected with the water storage component.

18. The water purifier according to claim 17, wherein
the holding component comprises a first shell and a second shell fitted with each other, the first shell is provided with a third connecting portion, and the third connecting portion is sleeved on the second connecting portion.

19. The water purifier according to claim 18, wherein
the second connecting portion is provided with a second screw hole, and the third connecting portion is provided with a second mounting hole at a position corresponding to the second screw hole.

20. The water purifier according to claim 19, wherein
the second mounting hole is located inside the holding component.

21. The water purifier according to claim 18, wherein
the first shell and the third connecting portion are of an integrated structure.

22. The water purifier according to claim 18, wherein
the second connecting portion and the third connecting portion are both columnar; and
the cross sections of the second connecting portion and the third connecting portion are adaptively circular, elliptical, polygonal or racetrack-shaped, respectively.

23. The water purifier according to claim 18, wherein
the outer wall of the second connecting portion is provided with a second guiding portion; and
the inner wall of the third connecting portion is provided with a third guiding portion fitted with the second guiding portion.

24. The water purifier according to claim 18, wherein
the first shell is provided with at least one fourth connecting portion, and the second shell is provided with at least one fifth connecting portion fitted with the fourth connecting portion.

25. The water purifier according to claim 24, wherein
the holding component composed of a plurality of shells is of a columnar structure;
the first shell comprises:
a first side wall and a bottom wall connected to the first side wall, each of the first side wall and the bottom wall being provided with the fourth connecting portion; or
a first side wall and a top wall connected to the first side wall, each of the first side wall and the top wall being provided with the fourth connecting portion; and
the second shell comprises:
a second side wall and a bottom wall connected to the second side wall, each of the second side wall and the bottom wall being provided with the fifth connecting portion; or
a second side wall and a top wall connected to the second side wall, each of the second side wall and the top wall being provided with the fifth connecting portion.

26. The water purifier according to claim 24, wherein
a plurality of fourth connecting portions are arranged inside the first shell symmetrically about the central axis of the holding component; and
a plurality of fifth connecting portions are arranged inside the second shell symmetrically about the central axis of the holding component.

27. The water purifier according to claim 24, wherein
the fourth connecting portion is any one of a buckle, a card slot, a slot and an insert; and the fifth connecting portion is any one of a buckle, a card slot, a slot and an insert fitted with the fourth connecting portion.

28. The water purifier according to claim 18, wherein
the water storage assembly comprises a water tank body and a water tank cover, and the holding component is connected with the water tank body.

29. The water purifier according to claim 28, wherein
the top of the water tank cover is provided with a through hole, and the water receiving assembly delivers water to the water tank body through the through hole.

30. The water purifier according to claim 28, wherein
the water tank body is provided with a second water outlet;
the water tank cover is provided with a third water outlet matching the second water outlet; and
the water tank is provided with a water outlet nozzle on the outer wall of the circumferential side of the second water outlet.

31. The water purifier according to claim 29, wherein
the floater assembly is arranged in the water tank cover;
the inner side wall of the water tank cover is provided with a sixth connecting portion, and the floater assembly is provided with a seventh connecting portion fitted with the sixth connecting portion.

32. The water purifier according to claim 29, wherein the water storage assembly further comprises:
a dial block movably arranged at the through hole to open or close the through hole.

33. The water purifier according to claim 32, wherein
a rotating shaft is arranged on one of the water tank cover and the dial block, and a shaft hole fitted with the rotating shaft is provided on the other one of the water tank cover and the dial block; or
a slide rail is arranged on one of the water tank cover and the dial block, and a slide support fitted with the slide rail is arranged on the other one of the water tank cover and the dial block.

34. The water purifier according to claim 32, wherein
the dial block and/or the water tank cover are provided with a first limiting portion for limiting the moving direction of the dial block.

35. The water purifier according to claim 28, wherein
the water tank body is of a cylindrical structure; and
the cross section of the water tank body is in the shape of one or more of a circle, an ellipse, a polygon and a racetrack.

36. The water purifier according to any one of claims 1 to 12, further comprising:
a line passing assembly, comprising a line passing pipe provided with a second limiting portion, the pipeline passing through the line passing pipe.

37. The water purifier according to claim 36, wherein the line passing assembly further comprises:
a connector provided with an eighth connecting portion;
wherein the line passing pipe is provided with a ninth connecting portion fitted with the eighth connecting portion.

38. The water purifier according to claim 37, wherein
the eighth connecting portion is of a first thread structure; and
the ninth connecting portion is of a second thread structure fitted with the first thread structure.

39. The water purifier according to claim 37, wherein
the wall of the line passing pipe is provided with a first opening through which the pipeline passes.

40. The water purifier according to claim 39, wherein
the line passing pipe is axially provided with a rib position or a flat position.

41. The water purifier according to claim 40, wherein the line passing assembly further comprises:
a decorative ring sleeved on the line passing pipe;
wherein the decorative ring is provided with a second opening matching the first opening; and
a tenth connecting portion fitted with the rib position or the flat position is provided in the decorative ring.

42. The water purifier according to claim 36, wherein the line passing assembly further comprises:
a second decorative cover arranged at one end of the line passing pipe, wherein the second decorative cover is provided with an eleventh connecting portion; and
the line passing pipe is provided with a twelfth connecting portion fitted with the eleventh connecting portion.

43. The water purifier according to claim 42, wherein
the eleventh connecting portion is any one of a buckle, a card slot, an insert, a slot and a thread structure; and
the twelfth connecting portion is any one of a buckle, a card slot, an insert, a slot and a thread structure fitted with the eleventh connecting portion.

44. The water purifier according to claim 36, wherein the line passing assembly further comprises:
a sealing ring, which is sleeved on the line passing pipe and located below the second limiting portion.

45. The water purifier according to claim 37, wherein
the connector is provided with bulges or grooves.

46. The water purifier according to claim 36, further comprising:
a protection pipe penetrating the line passing assembly, wherein the pipeline is arranged in the protection pipe; and
the protection pipe is connected with the water receiving assembly.
